(19) Europäisches Patentamt
European Patent Office
Office européen des brevets

(11) **EP 4 297 287 A1**

(12) **EUROPEAN PATENT APPLICATION**
published in accordance with Art. 153(4) EPC

(43) Date of publication:
**27.12.2023 Bulletin 2023/52**

(21) Application number: **22755509.1**

(22) Date of filing: **29.01.2022**

(51) International Patent Classification (IPC):
**H04B 7/0413** (2017.01)

(52) Cooperative Patent Classification (CPC):
**H04B 7/0413; H04B 7/0452**

(86) International application number:
**PCT/CN2022/074902**

(87) International publication number:
**WO 2022/174736 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2021 CN 202110195578**

(71) Applicant: **ZTE Corporation**
**Shenzhen, Guangdong 518057 (CN)**

(72) Inventors:
• **YE, Xinquan**
  **Shenzhen, Guangdong 518057 (CN)**
• **CHEN, Yijian**
  **Shenzhen, Guangdong 518057 (CN)**
• **ZHANG, Shujuan**
  **Shenzhen, Guangdong 518057 (CN)**
• **YU, Guanghui**
  **Shenzhen, Guangdong 518057 (CN)**
• **LU, Zhaohua**
  **Shenzhen, Guangdong 518057 (CN)**

(74) Representative: **Gevers Patents**
**Intellectual Property House**
**Holidaystraat 5**
**1831 Diegem (BE)**

(54) **USER SELECTION METHOD, INFORMATION SENDING METHOD, COMMUNICATION NODE AND STORAGE MEDIUM**

(57) The present application provides a user selection method, an information sending method, a communication node and a storage medium. The user selection method comprises: acquiring user feature information; determining user association information according to the user feature information; and selecting a user according to the user association information and a preset condition.

FIG. 1

**Description**

This application claims priority to Chinese Patent Application No. 202110195578.7, filed on February 19, 2021, which is incorporated herein by reference in its entirety.

TECHNICAL FIELD

The present application relates to wireless communication network, and for example, to a user selection method, an information sending method, a communication node and a storage medium.

BACKGROUND

Dense multiple-input multiple-output (Dense MIMO), distributed multiple-input multiple-output (Distributed MIMO), cell-free massive multiple-input multiple-output (Cell-Free Massive MIMO) has received increasing attention as key technologies in the multi-antenna field. This type of technology is characterized in that, compared with centralized APs, the spatial distribution of access points (APs) within a given area is more dispersed, and the number of APs is larger, and multiple APs may serve multiple user equipments (UEs) simultaneously. Interference between multiple users is inevitable, and as the number of users continues to increase, the interference between users becomes more complicated. The purpose of user selection is to reduce the interference between users accessing the network. However, the user selection algorithm in the related art needs to exhaustively enumerate a situation of each combination of users, calculate a corresponding index of each combination of users, and take a combination with the best index as selected users, and thus the complexity of the user selection is high. Alternatively, the user selection algorithm in the related art may select users randomly, in which case each scheduling of users is random, and thus although it is easy to implement user selection, the performance of the algorithm is poor, and the effect of reducing interference is not good.

SUMMARY

The present application provides a user selection method, an information sending method, a communication node and a storage medium, so as to efficiently select users and effectively reduce interference between selected users.

Embodiments of the present application provide a user selection method, and the method includes:

acquiring user feature information;
determining user association information according to the user feature information; and
selecting users according to the user association information and a preset condition.

Embodiments of the present application provide an information sending method, and the method includes:
sending user feature information, the user feature information being used to determine user association information and a user selection result.

Embodiments of the present application provide a communication node, and the node includes a memory, a processor, and a computer program stored on the memory and runnable on the processor. When executing the program, the processor implements the user selection method as described above or the information sending method as described above.

Embodiments of the present application provide a computer-readable storage medium having stored a computer program. When executed by a processor, the computer program implements the user selection method as described above or the information sending method as described above.

BRIEF DESCRIPTION OF THE DRAWINGS

FIG. 1 is a flowchart of a user selection method provided by an embodiment;
FIG. 2 is a flowchart of an information sending method provided by an embodiment;
FIG. 3 is a schematic diagram showing a structure of a user selection apparatus provided by an embodiment;
FIG. 4 is a schematic diagram showing a structure of an information sending apparatus provided by an embodiment; and
FIG. 5 is a schematic diagram showing a hardware structure of a communication node provided by an embodiment.

DETAILED DESCRIPTION

The present application will be described below in conjunction with drawings and embodiments. It will be understood that specific embodiments described herein are only used to explain the present application and not to limit the present application. It will be noted that, in the absence of conflict, the embodiments in the present application and features in the embodiments may be arbitrarily combined with one another. In addition, it will be noted that, for the convenience of description, only some structures rather than all structures related to the present application are shown in the drawings.

Some embodiments of the present application provide a user selection method, and the method may be applied to an access point (AP) or a centralized control node in a wireless network. The AP or the control node may efficiently select users according to the association between users on the premise of satisfying a preset condition, so as to effectively balance network performance and service relationship complexity and effectively reduce interference between selected users.

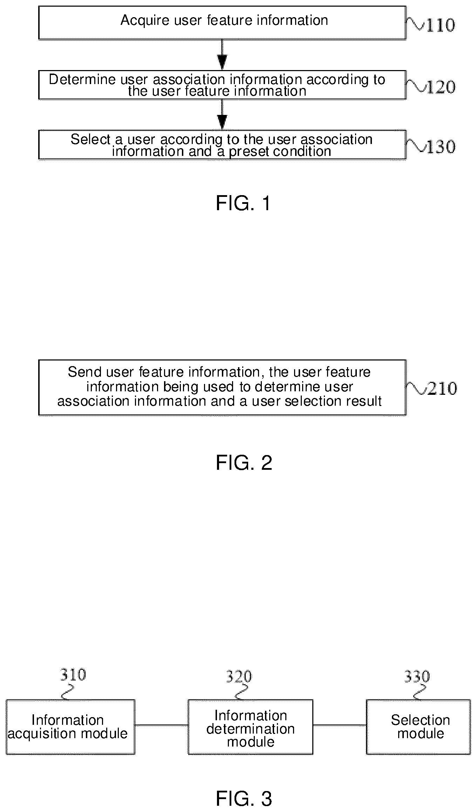

FIG. 1 is a flowchart of a user selection method provided by an embodiment. As shown in FIG. 1, the method provided by this embodiment includes steps 110 to 130.

In step 110, user feature information is acquired.

In this embodiment, the user feature information refers to information used to analyze a degree of association (which can also be understood as a degree of interference) between different users within the coverage of the network, such as channel information, throughput, power, location, latency and/or service relationship with the AP for each user. The user feature information may be measured by a user equipment (UE) and reported to the AP or the control node, or may be acquired or measured by the AP or the control node according to known information.

In step 120, user association information is determined according to the user feature information.

In this embodiment, the user association information is used to reflect the degree of association between different users, so that different user association information corresponds to different degrees of association. The AP or the control node may try to select users with a low degree of association to access the network according to the user association information, so as to reduce the interference between the selected users.

In step 130, users are selected according to the user association information and a preset condition.

In this embodiment, the preset condition includes an objective function for selecting users (e.g., maximizing the sum of throughputs of users accessing the network), a constraint condition (e.g., a constraint condition of users accessing the network), and a basis for determining whether users can be selected to access the network (e.g., ensuring that the sum of the throughputs of the users accessing the network reaches an expected value). On this basis, the AP or the control node may select an appropriate number of users with a low degree of association and high communication quality to access the network according to the user association information and the preset condition, so as to effectively balance network performance and service relationship complexity and effectively reduce the interference between the selected users.

In an embodiment, the user feature information includes at least one piece of the following information for each user: a large-scale parameter; instantaneous channel information; an instantaneous throughput; an average throughput; a location; a reference signal receiving power (RSRP); a signal to interference plus noise ratio (SINR); service relationship information with an AP; traffic; or a latency requirement.

In an embodiment, the user feature information includes set(s) each of $K$ elements, and $K$ is equal to the total number of users; each element represents at least one piece of the following information for a user: an instantaneous throughput; an average throughput; a SINR; traffic; or a latency requirement.

In this embodiment, the user feature information includes one or more sets, each set includes $K$ elements, and each element represents an instantaneous throughput, an average throughput, a SINR, traffic and/or a latency requirement for a user. For example, the user feature information includes Set 1 and Set 2, where Set 1 includes $K$ elements, an $i$-th ($i$ = 1, 2, ..., $K$) element represents an instantaneous throughput of an $i$-th user; and Set 2 includes $K$ elements, and an $i$-th element represents a SINR of an $i$-th user. In some embodiments, different types of user feature information may also be combined in a set, in which case the $i$-th element in the set represents a combined value of an instantaneous throughput and a SINR for the $i$-th user.

In an embodiment, the user feature information includes a set of $K$ element groups, and $K$ is equal to the total number of users; each element group includes at least two elements, and each element group represents a location of a user.

In this embodiment, the user feature information includes a set of $K$ element groups, each element group includes at least two elements, and each element group is used to represent two-dimensional or more than two-dimensional location information for a user. For example, each element group includes three elements ($x$, $y$, $z$), and then an i-th ($i$ = 1, 2, ..., $K$) element group ($x_i$, $y_i$, $z_i$) represents three-dimensional spatial coordinates of the i-th user.

In an embodiment, the user feature information includes set(s) each of $K$ element groups, and $K$ is equal to the total number of users; each element group represents one piece of the following information for a user: a large-scale parameter, instantaneous channel information and a RSRP; each element group includes $M$ elements, and $M$ is equal to the total number of APs; and each element is associated with an AP; each element is a zero element or a non-zero element, a zero element indicates that no service relationship has been established between a user corresponding to an element group to which the zero element belongs and an AP associated with the zero element, and the non-zero element indicates that a service relationship has been established between a user corresponding to an element group to which the non-zero element belongs and an AP associated with the non-zero element.

In this embodiment, the user feature information includes one or more sets, each set includes $K$ element groups, and each element group represents a large-scale parameter, instantaneous channel information or a RSRP for a user. There are $M$-$\lambda_j$ zero elements and $\lambda_j$ non-zero elements in a $j$-th ($j$ = 1, 2, ..., $K$) element group, the zero element indicates that no service relationship has been established between a $j$-th user and a corresponding AP, and the non-zero element indicates that a service relationship has been established between the *j*-th user and the corresponding AP; where $\lambda_j$ is the number of APs providing service for the *j*-th user, $\lambda_j$ is a positive integer not more than *M*, and *M* is the total number of APs.

For example, the user feature information includes large-scale parameters, which are composed of *K* element groups $(B_1, B_2..., B_j...B_K)$; each element group $B_j$ is composed of *M* elements $(\beta_{1,j}, \beta_{2,j}..., \beta_{l,j}...\beta_{M,j})$, where *l* (*l* = 1, 2, ..., *M*), *M* is the total number of APs, and $\beta_{l,j} \geq 0$. If $\beta_{l,j} = 0$, it is indicated that AP *l* does not provide service for User *j*; and if $\beta_{l,j} \neq 0$, it is indicated that AP *l* provides service for User *j*.

In an embodiment, the user association information is numeric data or non-numeric data; the non-numeric data includes at least one of: a degree of user association; a user-related level; or a user-related type.

The user association information is numeric data, which specifically may be a real number, and the real number may be positively or negatively correlated with the degree of user association. For example, the user association information between User A and User B is "2", and the user association information between User A and User C is "5", and then the degree of association between User A and User B is higher than the degree of association between User A and User C.

The user association information is non-numeric data. For example, at least two different identifiers are used to represent different degrees of association between users. For example, the user association information includes {strong association, weak association}, or include {strongest association, stronger association, strong association, medium association, weak association, weaker association, weakest association}, or include {first-level association, second-level association, third-level association, ...}; alternatively, characters such as a, b and c may be used to represent different degrees of association.

In an embodiment, step 120 includes: acquiring corresponding user association information according to a distance between the user feature information, the user association information is limited within a set range.

In this embodiment, there is a functional relationship between the user association information and the distance between the user feature information, and the distance between the user feature information may be cosine similarity, Euclidean distance or Manhattan distance. The user association information is acquired through the distance between the user feature information, and the user association information is limited within a set range, such as [0,1], [-1,1] or [0, 10], or {strong association, weak association}. Alternatively, the user association information may also be limited within a set range after specific operations (such as normalization). The user association information may be numeric data or non-numeric data, and the numeric data and the non-numeric data can be converted to and from each other.

For example, the user feature information includes large-scale parameters, which are composed of *K* element groups $(B_1, B_2..., B_j...B_K)$, and the user association information between User *j* and User m is calculated based on the cosine similarity:

$$\gamma_{j,m} = B_j^T \bullet B_m / (\|B_m\| \times \|B_m\|)$$

, where *j* and *m* are both positive integers not more than *K*. In a case of *j* = *m*, the cosine similarity between the user and itself is 1. The user association information between User *j* and User m is equivalent to the user association information between User m and User *j*, and recalculation is not required. If the user association information is regarded as a matrix, there is a need to calculate only elements in the upper or lower triangular matrix except diagonal elements, and the user association information matrix is a symmetric matrix.

Similarly, the user association information between User *j* and User m can also be calculated by using the Euclidean distance: $d_{j,m} = \|B_j - B_m\|_2$, where *j* and *m* are both positive integers not more than *K*. In the case of *j* = *m*, the Euclidean distance between the user and its own large-scale parameters is 0. The user association information between User *j* and User *m* is equivalent to the user association information between User *m* and User *j*, and recalculation is not required. If the user association information is regarded as a matrix, there is a need to calculate only elements in the upper or lower triangular matrix except the diagonal elements, and the user association information matrix is a symmetric matrix.

A distance between large-scale parameters is negatively correlated with the user association information between users, that is, the smaller the distance between large-scale parameters is, the greater the user association information between users is. In some embodiments, the distance between large-scale parameters may be very large, and the user association information between users is a non-zero real number not more than 1. Therefore, there is a need to perform specific operations on the distance between large-scale parameters and convert the distance into the user association information. For example, reciprocals of off-diagonal elements in the distance matrix is fined to obtain an unnormalized association degree matrix, and the unnormalized association degree matrix is divided by the maximum value of the off-diagonal elements to obtain off-diagonal elements of a normalized association degree matrix; diagonal elements in the normalized association degree matrix are each set to 1, i.e.,

$$\gamma_{j,m} = \begin{cases} \min(D_{j,m})/d_{j,m}, & j \neq m \\ 1, & j = m \end{cases}$$

, where $D_{j,m}$ is a distance matrix between large-scale parameters between User *j* and User m, $d_{j,m}$ is an element in a j-th row and an m-th column in $D_{j,m}$, and $\min(D_{j,m})$ is the minimum value of the off-diagonal elements in $D_{j,m}$.

Similarly, the user association information between User *j* and User *m* can also be calculated by using other distances, for example, based on the Manhattan distance: $d_{j,m} = \|B_j - B_m\|_1$. For a calculation process, reference may be made to the calculation process based on the Euclidean distance.

In an embodiment, the user association information constitutes a matrix of *K* rows and *K* columns, and diagonal elements of the matrix are 1; each element in the matrix represents user association information between a user corresponding to a row where the element is located and a user corresponding to a column where the element is located.

In this embodiment, the user association information is a matrix $\Gamma$ of *K* rows and *K* columns , $\gamma_{i,j}$ is an element in an i-th row and a *j*-th column of the matrix $\Gamma$, and the diagonal elements of the matrix $\Gamma$ are all 1. It will also be understood that the user association information includes *K* element groups $\Gamma_1, \Gamma_2 ..., \Gamma_j ... \Gamma_K$, and each element group $\Gamma_j$ is composed of *K* elements $\gamma_{1,j}, \gamma_{2,j} ..., \gamma_{i,j} ... \gamma_{K,j}$; where *i* = 1, 2, ..., *K*, *j* = 1, 2, ..., *K*, and $\gamma_{i,j} \in [0,1]$ ; $\gamma_{i,j}$ represents a degree of association between the i-th user and the *j*-th user; the larger the value of $\gamma_{i,j}$ is, the stronger the degree of association between the corresponding users is; the smaller the value of $\gamma_{i,j}$ is, the weaker the degree of association between the corresponding users is; when the value of $\gamma_{i,j}$ is 1, it is indicated that the corresponding users are completely associated; when the value of $\gamma_{i,j}$ is 0, it is indicated that the corresponding users are completely unassociated, and the user and itself are completely associated.

In an embodiment, the preset condition includes at least one of: a first preset condition including an objective function of selected users; a second preset condition including a constraint condition of the selected users; or a third preset condition including a determination condition of the selected users.

In an embodiment, the first preset condition includes at least one of: the sum of user association information between the selected users reaching the minimum value; the product of the user association information between the selected users reaching the minimum value; the maximum user association information among the user association information between the selected users reaching the minimum value; the sum of throughputs of the selected users reaching the maximum value; the product of the throughputs of the selected users reaching the maximum value; the minimum throughput among the throughputs of the selected users reaching the maximum value; the sum of spectral efficiencies of the selected users reaching the maximum value; the product of the spectral efficiencies of the selected user reaching the maximum value; the minimum spectral efficiency among the spectral efficiencies of the selected users reaching the maximum value; the sum of energy efficiencies of the selected users reaching the maximum value; the product of the energy efficiencies of the selected users reaching the maximum value; the minimum energy efficiency among the energy efficiencies of the selected users reaching the maximum value; the sum of signal to interference plus noise ratios (SINRs) of the selected users reaching the maximum value; the product of the SINRs of the selected users reaching the maximum value; or the minimum SINR among the SINRs of the selected users reaching the maximum value.

In an embodiment, the second preset condition includes at least one of: the number of the selected users being not less than $\alpha$ ; the number of the selected users being not more than $\mu$ ; the number of the selected users being $\xi$ ; or the number of the selected users being not less than $\alpha$ and not more than $\mu$; where $\alpha \leq K$, $\mu \leq K$, and $\xi \leq K$ ; $\alpha$ , $\mu$ and $\xi$ are all positive integers, and *K* is equal to the total number of users.

In an embodiment, the third preset condition includes at least one of: the number of adjustments of the selected users being not more than a threshold of times (denoted as *N*); the minimum user throughput among the throughputs of the selected users being not less than a first throughput threshold (denoted as T_min); the minimum spectral efficiency among the spectral efficiencies of the selected users being not less than a first spectral efficiency threshold (denoted as SE_min); the minimum energy efficiency among the energy efficiencies of selected users being not less than a first energy efficiency threshold (denoted as EE_min); the minimum SINR among the SINRs of the selected users being not less than a first SINR threshold (denoted as SINR_min); the sum of the throughputs of the selected users being not less than a second throughput threshold (denoted as T_sum); the sum of the spectral efficiencies of the selected users being not less than a second spectral efficiency threshold (denoted as SE_sum); the sum of the energy efficiencies of the selected users being not less than a second energy efficiency threshold (denoted as EE_sum); the sum of the SINRs of the selected users being not less than a second SINR threshold (denoted as SINR_sum); the product of the throughputs of the selected users being not less than a third throughput threshold (denoted as T_mul); the product of the spectral efficiencies of the selected users being not less than a third spectral efficiency threshold (denoted as SE_mul); the product of the energy efficiencies of the selected users being not less than a third energy efficiency threshold (denoted as EE_mul); the product of the SINRs of the selected users being not less than a third SINR threshold (denoted as SINR_mul); at least *X*1 selected users each having a throughput not less than a fourth throughput threshold (denoted as T_thre); at least *X*2 selected users each having a spectral efficiency not less than a fourth spectral efficiency threshold (denoted as SE_thre); at least *X*3 selected users each having an energy efficiency not less than a fourth energy efficiency threshold (denoted as EE_thre); or at least *X*4 selected users each having a SINR not less than a fourth SINR threshold (denoted as SINR_thre); where *N* is a positive integer; T_min, SE_min, EE_min, T_sum, SE_sum, EE_sum, T_mul, SE_mul, EE_mul, T_thre, SE_thre, EE_thre are all positive numbers; SINR_min, SINR_sum, SINR_mul, SINR_thre are all real numbers; $X1 \leq K$, $X2 \leq K$, $X3 \leq K$, and $X4 \leq K$; $X1$, $X2$, $X3$ and $X4$ are all positive integers.

In some embodiments, step 130 includes:

> step 1310: grouping users according to the user association information;
> step 1320: determining an initial set of selected users according to user grouping information and the second preset condition; and
> step 1330: adjusting a set of selected users according to the first preset condition and the second preset condition until the third preset condition is satisfied, and then taking users in a set of selected users as selected users.

For example, a process of selecting users includes:

> 1) dividing users into $\theta$ groups according to the user association information matrix $\Gamma$, the user grouping information being denoted as $G = \{g_1, g_2, \cdots, g_\theta\}$, which is used to represent users included in each group;
> 2) determining the initial set $S_i$ ($i = 1$) of selected users according to the user grouping information $G$ and the second preset condition;
> 3) determining a new set $S_{i+1}$ of selected users according to a current $S_i$, the user grouping information $G$, the first preset condition and the second preset condition;
> 4) determining whether to end the adjustment of the set of selected users according to the third preset condition; if it is determined to end the adjustment, executing 5); and otherwise, executing 3);
> 5) determining final selected users according to a set of selected users obtained from the last adjustment.

It will be noted that the above 3) and 4) are executed in a loop, and the counter is automatically incremented by 1 each loop; in addition, an order of 3) and 4) may be reversed.

In an embodiment, the user grouping information includes $\theta$ element groups, each element group includes at least one element, each element corresponds to a user, and $\theta$ is a positive integer; a probability that users corresponding to elements in different element groups are jointly selected is greater than a probability that users corresponding to elements in a same element group are jointly selected.

In this embodiment, the user grouping information G is composed of $\theta$ element groups $\{g_1, g_2, \cdots, g_l \cdots, g_\theta\}$, and each element group $g_l$ ($l = 1, 2, ..., \theta$) is composed of at least one element, and each element is an identity document (ID) number for a user. There is strong association between different users within the same element group, while there is weak association between different users from different element groups; users with weak association have a relatively high probability of being selected simultaneously, while users with strong association have a relatively low probability of being selected simultaneously.

In an embodiment, the initial number of selected users is $\delta$, and $\delta$ is a positive integer; step 1320 includes:

> in a case of $\delta \leq \theta$, selecting $\delta$ element groups from the $\theta$ element groups, and selecting a user from each element group of the $\delta$ element groups to constitute the initial set of selected users; and
> in a case of $\delta > \theta$, selecting a user from each element group of the $\theta$ element groups, and selecting $\delta - \theta$ users from the $\theta$ element groups, so as to constitute the initial set of selected users;
> where $\delta$ is determined according to the second preset condition.

In this embodiment, the number of elements in the initial set $S_1$ of selected users is $\delta$, and there is a magnitude relationship between $\delta$ and $\theta$, including two cases: $\delta \leq \theta$ and $\delta > \theta$.

In the case of $\delta \leq \theta$, $\delta$ user groups may be selected from $\theta$ user groups, and a user is selected from each group of the selected $\delta$ user groups to constitute $S_1$. It will be noted that, $S_1$ is not required to be the optimal result, and may be a result obtained by randomly selecting $\delta$ user groups from the $\theta$ user groups, or may be a combination of the optimal $\delta$ groups selected from a finite number of combinations of $C_\theta^\delta$.

In the case of $\delta > \theta$, a user is firstly selected from each group of the $\theta$ user groups, and then $\delta - \theta$ users are selected from the $\theta$ user groups, and the results of the two selections of users are taken as the initial set $S_1$ of selected users. It will be noted that, $S_1$ is not required to be the optimal result; the $\delta - \theta$ users selected for the second time from the $\theta$ user groups may be users from $\delta - \theta$ different user groups, or may be $\delta - \theta$ users from a same user group, or may be a situation where some users are selected from a same user group and others are selected from different user groups; and a specific situation of selecting $\delta - \theta$ users from the $\theta$ user groups for the second time depends on the number of elements in the $\theta$ groups. Similar to the case of $\delta \leq \theta$, the selection of $\delta - \theta$ users from the $\theta$ user groups for the second time may be a random selection, or may be a combination of the optimal $\delta - \theta$ users selected from a finite number of combinations.

In an embodiment, in a case where the second preset condition includes the number of selected users being not less than $\alpha$, $\delta = \alpha$;

> in a case where the second preset condition includes the number of selected users being not more than

$\mu$, $\delta = \mu$ ;

in a case where the second preset condition includes the number of selected users being not less than $\alpha$ and not more than $\mu$, $\alpha \le \delta \le \mu$ ; and

in a case where the second preset condition includes the number of selected users being $\xi$, $\xi_1 \le \delta \le \xi_2$ ; where $\xi_1 < \xi < \xi_2$, $\xi_1$ and $\xi_2$ are all positive numbers, $\alpha \le K$, $\mu \le K$, $\xi \le K$, $\alpha$ , $\mu$ and $\xi$ are all positive integers, and $K$ is equal to the total number of users.

In an embodiment, step 1330 includes:

step 13310: determining an adjustment manner for the set of selected users according to the second preset condition; and
step 13320: adjusting the set of selected users according to the adjustment manner, and users in the set of selected users satisfying the first preset condition.

In this embodiment, the second preset condition is used to determine the adjustment manner of the set of selected users, and the first preset condition is an optimization goal of the selected users.

In an embodiment, in the case where the second preset condition includes the number of selected users being not less than $\alpha$ , the adjustment manner is to increase users in the set of selected users;

in the case where the second preset condition includes the number of selected users being not more than $\mu$, the adjustment manner is to decrease users in the set of selected users;
in a case where the second preset condition includes the number of selected users being not less than $\alpha$ and not more than $\mu$, the adjustment manner is to increase or decrease users in the set of selected users; and
in the case where the second preset condition includes the number of selected users being $\xi$, the adjustment manner is to increase or decrease users in the set of selected users;
where $\alpha \le K$, $\mu \le K$, $\xi \le K$, $\alpha$, $\mu$ and $\xi$ are all positive integers, and $K$ is equal to a total number of users.

In an embodiment, the first preset condition includes the sum of the user association information between the selected users reaching the minimum value; the second preset condition includes at least one of: the number of selected users being not less than $\alpha$ , the number of selected users being $\xi$ , or the number of selected users being not less than $\alpha$ and not more than $\mu$, where $\alpha \le K$, $\mu \le K$, $\xi \le K$, $\alpha$ , $\mu$ and $\xi$ are all positive integers, and $K$ is equal to the total number of users; and step 13320 includes: selecting a set number of users from unselected users to be added to the set of selected users, so that the sum of the user association information between the users in the set of selected users is the minimum.

In this embodiment, the first preset condition is that the sum of the user association information is the minimum; and the second preset condition includes a lower limit value $\alpha$ or a specified value ($\xi$) of the number of selected users, and then the adjustment manner is to select one (or multiple, where the number of selected users each time may be the same or different) new user(s) $P$ from a set $D$ composed of unselected users to be added to the set $S_i$ to constitute a set $S_{i+1}$, the goal of which is to minimize the sum of user association information between all users in $S_{i+1}$.

In an embodiment, the first preset condition includes the product of the user association information between the selected users reaching the minimum value; the second preset condition includes at least one of: the number of selected users being not less than $\alpha$ , the number of selected users being $\xi$ , or the number of selected users being not less than $\alpha$ and not more than $\mu$ , where $\alpha \le K$ , $\mu \le K$, $\xi \le K$, $\alpha$ , $\mu$ and $\xi$ are all positive integers, and $K$ is equal to the total number of users; and step 13320 includes: selecting a set number of users from unselected users to be added to the set of selected users, so that the product of the user association information between the users in the set of selected users is the minimum.

In this embodiment, the first preset condition is that the product of the user association information is the minimum; the second preset condition includes a lower limit value ($\alpha$ ) or a specified value ($\xi$) of the number of selected users, and then the adjustment manner is to select one (or multiple, where the number of selected users each time may be the same or different) new user(s) $P$ from a set $D$ composed of unselected users to be added to the set $S_i$ to constitute a set $S_{i+1}$, the goal of which is to minimize the product of user association information between all users in the set.

In an embodiment, the first preset condition includes at least one of: the sum of throughputs of the selected users reaching the maximum value, the sum of spectral efficiencies of the selected users reaching the maximum value, the sum of energy efficiencies of the selected users reaching the maximum value, or the sum of SINRs of the selected users reaching the maximum value; the second preset condition includes at least one of: the number of selected users being not less than $\alpha$ , the number of selected users being ç, or the number of selected users being not less than $\alpha$ and not more than $\mu$ , where $\alpha \le K$, $\mu \le K$, $\xi \le K$, $\alpha$, $\mu$ and $\xi$ are all positive integers, and $K$ is equal to the total number of users; and step 13320 includes: selecting a set number of users from unselected users to be added to the set of selected users, so that the sum of throughputs of the users in the set of selected users reaches the maximum value, the sum of spectral efficiencies of the users in the set of selected users reaches the maximum value, the sum of energy efficiencies of the users in the set of selected users reaches the maximum value, and/or the sum of SINRs of the users in the set of selected users reaches the maximum value.

In this embodiment, the first preset condition is that the sum of throughputs of the selected users is the maximum, the sum of spectral efficiencies of the selected users is the maximum, the sum of energy efficiencies of the selected users is the maximum, and/or the sum of SINRs of the selected users is the maximum; the second preset condition includes a lower limit value ($\alpha$) or a specified value ($\xi$) of the number of selected users, and then the adjustment manner is to select one (or multiple, where the number of selected users each time may be the same or different) new user(s) $\rho$ from a set $D$ composed of unselected users to be added to the set $S_i$ to constitute a set $S_{i+1}$, the goal of which is to make the sum of throughputs of the users in $S_{i+1}$ reach the maximum value, make the sum of spectral efficiencies of the users in $S_{i+1}$ reach the maximum value, make the sum of energy efficiencies of the users in $S_{i+1}$ reach the maximum value, and/or make the sum of SINRs of the users in $S_{i+1}$ reach the maximum value.

In an embodiment, the first preset condition includes at least one of: the product of throughputs of the selected users reaching the maximum value, the product of spectral efficiencies of the selected users reaching the maximum value, the product of energy efficiencies of the selected users reaching the maximum value, or the product of SINRs of the selected users reaching the maximum value; the second preset condition includes at least one of: the number of selected users being not less than $\alpha$, the number of selected users being $\xi$, or the number of selected users being not less than $\alpha$ and not more than $\mu$, where $\alpha \le K$, $\mu \le K$, $\xi \le K$, and $\alpha$, $\mu$ and $\xi$ are all positive integers, and $K$ is equal to the total number of users; and

step 13320 includes: selecting a set number of users from unselected users to be added to the set of selected users, so that the product of throughputs of the users in the set of selected users reaches the maximum value, the product of spectral efficiencies of the users in the set of selected users reaches the maximum value, the product of energy efficiencies of the users in the set of selected users reaches the maximum value, and/or the product of SINRs of the users in the set of selected users reaches the maximum value.

In this embodiment, the first preset condition is that the product of throughputs of the selected users is the maximum, the product of spectral efficiencies of the selected users is the maximum, the product of energy efficiencies of the selected users is the maximum, and/or the product of SINRs of the selected users is the maximum; the second preset condition includes a lower limit value ($\alpha$) or a specified value ($\xi$) of the number of selected users, and then the adjustment manner is to select one (or multiple, where the number of selected users each time may be the same or different) new user(s) $\rho$ from a set $D$ composed of unselected users to be added to the set $S_i$ to form a set $S_{i+1}$, the goal of which is to make the product of throughputs of the users in $S_{i+1}$, reach the maximum value, make the product of spectral efficiencies of the users in $S_{i+1}$ reach the maximum value, make the product of energy efficiencies of the users in $S_{i+1}$ reach the maximum value, and/or make the product of SINRs of the users in $S_{i+1}$ reach the maximum value.

In an embodiment, the first preset condition includes at least one of: the minimum throughput among throughputs of the selected users reaching the maximum value, the minimum spectral efficiency among spectral efficiencies of the selected users reaching the maximum value, the minimum energy efficiency among energy efficiencies of the selected users reaching the maximum value, or the minimum SINR among SINRs of the selected users reaching the maximum value; the second preset condition includes at least one of: the number of selected users being not less than $\alpha$; the number of selected users being ç; or the number of selected users being not less than $\alpha$ and not more than $\mu$, where $\alpha \le K$, $\mu \le K$, $\xi \le K$, and $\alpha$, $\mu$ and ç are all positive integers, and $K$ is equal to the total number of users; and

step 13320 includes: selecting a set number of users from unselected users to be added to the set of selected users, so that the minimum throughput among throughputs of the users in the set of selected users reaches the maximum value, the minimum spectral efficiency among spectral efficiencies of the users reaches the maximum value, the minimum energy efficiency among energy efficiencies of the users reaches the maximum value, and/or the minimum SINR among SINRs of the users reaches the maximum value.

In this embodiment, the first preset condition is that the minimum throughput corresponding to the selected users is the maximum, the minimum spectral efficiency corresponding to the selected users is the maximum, the minimum energy efficiency corresponding to the selected users is the maximum, and/or the minimum SINR corresponding to the selected users is the maximum; the second preset condition includes a lower limit value ($\alpha$) or a specified value ($\xi$) of the number of selected users, and then the adjustment manner is to select one (or multiple, where the number of selected users each time may be the same or different) new user(s) $P$ from a set $D$ composed of unselected users to be added to the set $S_i$ to constitute a set $S_{i+1}$, the goal of which is to maximize the minimum throughput in $S_{i+1}$, maximize the minimum spectral efficiency in $S_{i+1}$, maximize the minimum energy efficiency in $S_{i+1}$, and/or maximize the minimum SINR in $S_{i+1}$.

In an embodiment, the first preset condition includes the sum of user association information between the selected users reaching the minimum value; the second preset condition includes at least one of: the number of selected users being not more than $\mu$, the number of selected users being $\xi$, the number of selected users being not less than $\alpha$ and not more than $\mu$, where $\alpha \le K$, $\mu \le K$, $\xi \le K$, and $\alpha$, $P$ and $\xi$ are all positive integers, and $K$ is equal to the total number of users; and

step 13320 includes: deleting a set number of users from the set of selected users, so that the sum of user association information between users in the set of selected users is the minimum.

In this embodiment, the first preset condition is that the sum of the user association information is the minimum; the second preset condition includes an upper limit value ($\mu$) or a specified value ($\xi$) of the number of selected users, and then the adjustment manner is to delete one (or multiple, where the number of deleted users each time may be the same or different) user(s) $\omega$ from $S_i$ to obtain $S_{i+1}$, the goal of which is to minimize the sum of user association information between all users in $S_{i+1}$.

In an embodiment, the first preset condition includes that the product of user association information between the selected users reaches the minimum value;

the second preset condition includes at least one of: the number of selected users being not more than J1, the number of selected users being ç, the number of selected users being not less than $\alpha$ and not more than $\mu$, where $\alpha \le K$, $\mu \le K$, $\xi \le K$, and $\alpha$, $\mu$ and $\xi$ are all positive integers, and $K$ is equal to the total number of users; and
step 13320 includes: deleting a set number of users from the set of selected users, so that the product of user association information between users in the set of selected users is the minimum.

In this embodiment, the first preset condition is that the product of the user association information is the minimum; the second preset condition includes an upper limit value ($\mu$) or a specified value ($\xi$) of the number of selected users, and then the adjustment manner is to delete one (or multiple, where the number of deleted users each time may be the same or different) user(s) $\omega$ from $S_i$ to obtain $S_{i+1}$, the goal of which is to minimize the product of user association information between all users in $S_{i+1}$.

In an embodiment, the first preset condition includes at least one of: the sum of throughputs of the selected users reaching the maximum value, the sum of spectral efficiencies of the selected users reaching the maximum value, the sum of energy efficiencies of the selected users reaching the maximum value, or the sum of SINRs of the selected users reaching the maximum value; the second preset condition includes at least one of: the number of selected users being not more than $\mu$, the number of selected users being $\xi$, the number of selected users being not less than $\alpha$ and not more than $\mu$, where $\alpha \le K$, $\mu \le K$, $\xi \le K$, and $\alpha$, $P$ and $\xi$ are all positive integers, and $K$ is equal to the total number of users; and
step 13320 includes: deleting a set number of users from the set of selected users, so that the sum of throughputs of the users in the set of selected users reaches the maximum value, the sum of spectral efficiencies of the users in the set of selected users reaches the maximum value, the sum of spectral efficiencies of the users in the set of selected users reaches the maximum value, and/or the sum of SINRs of the users in the set of selected users reaches the maximum value.

In this embodiment, the first preset condition is that the sum of throughputs of the selected users is the maximum, the sum of spectral efficiencies of the selected users is the maximum, the sum of energy efficiencies of the selected users is the maximum, and/or the sum of SINRs of the selected users is the maximum; the second preset condition includes an upper limit value ($\mu$) or a specified value ($\xi$) of the number of selected users, and then the adjustment manner is to delete one (or multiple, where the number of deleted users each time may be the same or different) user(s) $\omega$ from $S_i$ to obtain $S_{i+1}$, the goal of which is to make the sum of throughputs of the users in $S_{i+1}$, reach the maximum value, make the sum of spectral efficiencies of the users in $S_{i+1}$ reach the maximum value, make the sum of energy efficiencies of the users in $S_{i+1}$ reach the maximum value, and/or make the sum of SINRs of the users in $S_{i+1}$ reach the maximum value.

In an embodiment, the first preset condition includes at least one of: the product of throughputs of the selected users reaching the maximum value, the product of spectral efficiencies of the selected users reaching the maximum value, the product of energy efficiencies of the selected users reaching the maximum value, or the product of SINRs of the selected users reaching the maximum value; the second preset condition includes at least one of: the number of selected users being not more than $\mu$, the number of selected users being ç, the number of selected users being not less than $\alpha$ and not more than $\mu$, where $\alpha \le K$, $\mu \le K$, $\xi \le K$, and $\alpha$, $\mu$ and ç are all positive integers, and $K$ is equal to the total number of users; and
step 13320 includes: deleting a set number of users from the set of selected users, so that the product of throughputs of the users in the set of selected users reaches the maximum value, the product of spectral efficiencies of the users in the set of selected users reaches the maximum value, the product of spectral efficiencies of the users in the set of selected users reaches the maximum value, and/or the product of SINRs of the users in the set of selected users reaches the maximum value.

In this embodiment, the first preset condition is that the product of throughputs of the selected users is the maximum, the product of spectral efficiencies of the selected users is the maximum, the product of energy efficiencies of the selected users is the maximum, and/or the product of SINRs of the selected users is the maximum; the second preset condition includes an upper limit value ($\mu$) or a specified value ($\xi$) of the number of selected users, and then the adjustment manner is to delete one (or multiple, where the number of deleted users each time may be the same or different) user(s) $\omega$ from $S_i$ to obtain $S_{i+1}$, the goal of which is to make the product of throughputs of the users in $S_{i+1}$ reach the maximum value, make the product of spectral efficiencies of the users in $S_{i+1}$ reach the maximum value, make the product of energy efficiencies of the users in $S_{i+1}$ reach the maximum value, and/or make the product of SINRs of the users in $S_{i+1}$, reach the maximum value.

In an embodiment, the first preset condition includes at least one of: the minimum throughput among throughputs of the selected users reaching the maximum value, the minimum spectral efficiency among spectral efficiencies of the selected users reaching the maximum value, the minimum energy efficiency among energy efficiencies of the selected users reaching the maximum value, or the minimum SINR among SINRs of the selected users reaching the maximum value; the second preset condition includes at least one of: the number of selected users being not more than $\mu$, the number of selected users being $\xi$, the number of selected users being not less than $\alpha$ and not more than $\mu$, where $\alpha \le K, \mu \le K, \xi \le K$, and $\alpha$, $P$ and $\xi$ are all positive integers, and $K$ is equal to the total number of users; and

step 13320 includes: deleting a set number of users from the set of selected users, so that the minimum throughput among throughputs of the users in the set of selected users reaches the maximum value, the minimum spectral efficiency among spectral efficiencies of the users in the set of selected users reaches the maximum value, the minimum energy efficiency among energy efficiencies of the users in the set of selected users reaches the maximum value, and/or the minimum SINR among SINRs of the users in the set of selected users reaches the maximum value.

In this embodiment, the first preset condition is that the minimum throughput corresponding to the selected users is the maximum, the minimum spectral efficiency corresponding to the selected users is the maximum, the minimum energy efficiency corresponding to the selected users is the maximum, and/or the minimum SINR corresponding to the selected users is the maximum; the second preset condition includes an upper limit value ($\mu$) or a specified value ($\xi$) of the number of selected users, and then the adjustment manner is to delete one (or multiple, where the number of deleted users each time may be the same or different) user(s) $\omega$ from $S_i$ to obtain $S_{i+1}$, the goal of which is to maximize the minimum throughput in $S_{i+1}$, maximize the minimum spectral efficiency in $S_{i+1}$, maximize the minimum energy efficiency in $S_{i+1}$, and/or maximize the minimum SINR in $S_{i+1}$.

In the above embodiments, $\alpha$, $\mu$, $\delta$, ç, $\xi_1$, $\xi_2$, $\rho$, $\omega$ are all positive integers not more than $K$, $D = \{1,2,\cdots,K\}-S_i$, $\rho \in D$ and $\omega \in S_i$.

The process of selecting users will be described below through specific examples.

Example 1

The first preset condition is that the sum of user association information between all the selected users is the minimum, or the product of user association information between all the selected users is the minimum, or the sum of throughputs of all the selected users is the maximum, or the product of throughputs of all the selected users is the maximum, or the minimum throughput of all the selected users is the maximum.

The second preset condition is that the number of selected users is not less than $\alpha$, and $\alpha$ is a positive integer not more than $K$.

The third preset condition is that the number of adjustments of the set of selected users is not more than $N$, or the minimum throughput corresponding to the selected users is not less than T_min, or the minimum spectral efficiency corresponding to the selected users is not less than SE_min, or the minimum energy efficiency corresponding to the selected users is not less than EE_min, or the minimum SINR corresponding to the selected users is not less than SINR_min, or the sum of throughputs of all the selected users is not less than T_sum, or the sum of spectral efficiencies of all the selected users is not less than SE_sum, or the sum of energy efficiencies of all the selected users is not less than EE_sum, or the sum of SINRs of all the selected users is not less than SINR_sum, or the product of throughputs of all the selected users is not less than T_mul, or the product of spectral efficiencies of all the selected users is not less than SE_mul, or the product of energy efficiencies of all the selected users is not less than EE_mul, or the product of SINRs of all the selected users is not less than SINR_mul, or at least $X1$ selected users have a throughput not less than T_thre, or at least $X2$ selected users have a spectral efficiency not less than SE_thre, or at least $X3$ selected users have an energy efficiency not less than EE_thre, or at least $X4$ selected users have a SINR not less than SINR_thre; where $\alpha \le K$, $X1 \le K$, and $\alpha$, $X1$, $X2$, $X3$ and $X4$ are all positive integers, $K$ is the number of all users in an area, $N$ is a positive integer, T_min, SE_min, EE_min, T_sum, SE_sum, EE_sum, T_mul, SE_mul, EE_mul, T_thre, SE_thre, EE_thre are all positive numbers, and SINR_min, SINR_sum, SINR_mul, and SINR_thre are all real numbers.

The second preset condition is that the number of selected users is not less than $\alpha$, and then the initial number $\delta$ of selected users satisfies $\delta = \alpha$, and the adjustment manner is to gradually increase the selected users.

The process of selecting users includes:

1) grouping users according to the user association information matrix $\Gamma$ to obtain the user grouping information $G = \{g_1, g_2, \cdots, g_l \cdots, g_d\}$;
2) determining the initial set S, of selected users according to the user grouping information G and the second preset condition;
3) determining a next set $S_{i+1}$, of selected users according to a current set $S_i$ of selected users, the user grouping situation G, the first preset condition and the second preset condition;
4) determining whether to end the adjustment of the set of selected users according to the third preset condition; if it is determined to end the adjustment, executing 5); and otherwise, executing 3); and

5) determining final selected users according to the last adjusted set of selected users.

In 1) of this example, each group $g_l$ ($l$ = 1, 2, ..., $\theta$) includes at least one user, and there is strong association between different users within the same group, while there is weak association between users from different groups, where $2 \le \theta \le K$ and $1 \le l \le \theta$.

In 2) of this example, there is a magnitude relationship between the number $\delta$ of selected users and $\theta$, including two cases: $\delta \le \theta$ and $\delta > \theta$.

In the case of $\delta \le \theta$, the number of selected users is not more than the number of user groups; $\delta$ user groups may be selected from $\theta$ user groups, and a user is selected from each group of the selected $\delta$ user groups to constitute the initial set S, of selected users; S, is not required to be the optimal result, and may be a result obtained by randomly selecting $\delta$ user groups from the $\theta$ user groups, or may be a combination of the optimal $\delta$ groups selected from a finite number of combinations of

$$C_\theta^\delta$$ .

In the case of $\delta > \theta$, the number of selected users is greater than the number of user groups; a user is firstly selected from each group of the $\theta$ user groups, and then $\delta$-$\theta$ users are selected from the $\theta$ user groups, and the results of the two selections of users are taken as the initial set S, of selected users. S, is not required to be the optimal result; the $\delta$-$\theta$ users selected for the second time from the $\theta$ user groups may be users from $\delta$-$\theta$ different user groups, or may be $\delta$-$\theta$ users from a same user group, or may be a situation where some users are selected from a same user group and others are selected from different user groups; a specific situation of selecting $\delta$-$\theta$ users from the $\theta$ user groups for the second time depends on the number of elements in the $\theta$ groups. Similar to the case of $\delta \le \theta$, the selection of $\delta$ - $\theta$ users from the $\theta$ user groups for the second time may be a random selection, or may be a combination of the optimal $\delta$ - $\theta$ users selected from a finite number of combinations.

In 3) of this example, a manner of determining $S_{i+1}$ according to $S_i$, G, the first preset condition and the second preset condition, includes:

Manner A1: adding a selected user P on the basis of $S_i$, so that the sum of user association information between all users in $S_{i+1}$ is the minimum;
Manner A2: adding a selected user P on the basis of $S_i$, so that the product of user association information between all users in $S_{i+1}$ is the minimum;
Manner A3: adding a selected user P on the basis of $S_i$, so that the sum of throughputs of all users in $S_{i+1}$ is the maximum;
Manner A4: adding a selected user P on the basis of $S_i$, so that the product of throughputs of all users in $S_{i+1}$ is the maximum; or
Manner A5: adding a selected user P on the basis of $S_i$, so that a throughput of a user with the minimum throughput in $S_{i+1}$ is the maximum.

For example, $S_i$ = {$a,b,c$}, where $a$, $b$, $c$ each represent a selected user; $D$ = {1,2,$\cdots$, $K$} - $S_i$, $\rho \in D$, and then $S_{i+1} = S_i \cup \rho = \{a,b,c,\rho\}$ .

In Manner A1, there is a need to find P that satisfies the objective function $\min_\rho \sum_m \gamma_{\rho m}$ under the constraints of $\rho \in D$ and $m \in S_{i+1}$ .

In Manner A2, there is a need to find P that satisfies the objective function $\min_\rho \prod_m \gamma_{\rho m}$ under the constraints of $\rho \in D$ and $m \in S_{i+1}$ .

In Manner A3, there is a need to find P that satisfies the objective function $\max_\rho \sum_m T_m$ under the constraints of $\rho \in D$ and $m \in S_{i+1}$ .

In Manner A4, there is a need to find P that satisfies the objective function $\max_\rho \prod_m T_m$ under the constraints of $\rho \in D$ and $m \in S_{i+1}$ .

In Manner A5, there is a need to find P that satisfies the objective function $\max_\rho \min_m T_m$ under the constraints of $\rho \in D$ and $m \in S_{i+1}$.

The elements in $S_i$ represent IDs of the selected users obtained for an i-th time; the set $D$ is a difference set of a set {1,2,$\cdots$,$K$} of all users in an area minus the set $S_i$, i.e., current unselected users; K is the number of all users in the area, $a,b,c,\rho$ are each a positive integer not more than $K$, and $a,b,c,\rho$ are different from one another; $\gamma_{\rho m}$ is the user association information between User $P$ and User m, and $T_m$ is a throughput of User m in $S_{i+1}$.

In fact, it is necessary to determine which manner to use in combination with the specific first preset condition. In a case where the first preset condition is that the sum of the user association information between the selected users is the minimum, the product of the user association information between the selected users is the minimum, the sum of throughputs of all the selected users is the maximum, the product of throughputs of all the selected users is the maximum, or the minimum throughput corresponding to the selected users is the maximum, Manners A1, A2, A3, A4, or A5 is used respectively.

Similarly, in a case where the first preset condition is that the sum of spectral efficiencies of all the selected users is the maximum, the sum of energy efficiencies of all the selected users is the maximum, or the sum of SINRs of all the selected users is the maximum, similar to Manner A3, the throughput variable in the objective function in Manner A3 is replaced by a corresponding spectral efficiency variable, energy efficiency variable, or SINR variable respectively. It will be noted that the replaced variable is still a corresponding variable of the users in $S_{i+1}$.

Similarly, in a case where the first preset condition is that the product of spectral efficiencies of all the selected users is the maximum, the product of energy efficiencies of all the selected users is the maximum, or the product of SINRs of all the selected users is the maximum, similar to Manner A4, it is necessary to replace the throughput variable in the objective function in Manner A4 with a corresponding spectral efficiency variable, energy efficiency variable, or SINR variable respectively. It will be noted that the replaced variable is still a corresponding variable of the users in $S_{i+1}$.

Similarly, in a case where the first preset condition is that the minimum spectral efficiency corresponding to the selected users is the maximum, the minimum energy efficiency corresponding to the selected users is the maximum, or the minimum SINR corresponding to the selected users is the maximum, similar to Manner A5, it is necessary to replace the throughput variable in the objective function in Manner A5 with the corresponding spectral efficiency variable, energy efficiency variable, or SINR variable. It will be noted that the replaced variable is still a corresponding variable of the users in $S_{i+1}$.

In 4) of this example, the process of selecting users is ensured to be convergent. In a case where the third preset condition is that the number of adjustments of the set of selected users is not more than $N$, it can be determined whether to end the adjustment according to whether a counter $i$ is more than $N$; and if $i$ is not more than $N$, return to execute 3), and otherwise execute 5). In a case where the third preset condition is that the minimum throughput corresponding to the selected users is not less than T_min, it is necessary to determine whether the minimum throughput corresponding to the users in the current $S_i$ is less than T_min; if so, execute 3), and otherwise, execute 5).

Similarly, in a case where the third preset condition is that the minimum spectral efficiency corresponding to the selected users is not less than SE_min, or the minimum energy efficiency corresponding to the selected users is not less than EE_min, or the minimum SINR corresponding to the selected users is not less than SINR_min, or the sum of throughputs of all the selected users is not less than T_sum, or the sum of spectral efficiencies of all the selected users is not less than SE_sum, or the sum of energy efficiencies of all the selected users is not less than EE_sum, or the sum of SINRs of all the selected users is not less than SINR_sum, or the product of throughputs of all the selected users is not less than T_mul, or the product of spectral efficiencies of all the selected users is not less than SE_mul, or the product of energy efficiencies of all the selected users is not less than EE_mul, or the product of SINRs of all the selected users is not less than SINR_mul, or at least *X1* users each have a throughput not less than T_thre, or at least *X2* users each have a throughput not less than SE_thre, or at least *X3* users each have a throughput not less than EE_thre, and/or at least *X4* users each have a throughput not less than SINR_thre, it is necessary to determine whether the condition of ending the adjustment is satisfied; if no, return to execute 3), and otherwise execute 5).

In order to ensure that the final result is convergent, various thresholds in the third preset condition may be set according to actual needs, and are not required to be too strict.

In 3) of this example, the current set of selected users is $S_i$, and the next set of selected users after adjustment is $S_{i+1}$, and $i$ starts counting from 1; if an iteration stop condition is not satisfied after executing 4), $i$ is automatically incremented by 1 and then return to execute 3).

4) of this example is to determine whether it is necessary to continue to adjust the set of selected users. If the stop condition is not satisfied, the counter $i$ is incremented by 1, and continue to return to execute 3); and otherwise, end the adjustment, execute 5) to determine the final selected users.

3) and 4) in this example do not in a strict order and may be interchanged. 3) and 4) need to be executed in each loop. In a case of executing 4) first, if the initial set of selected users just satisfies the third preset condition, the adjustment process may be ended, that is, executing 4) first may end the adjustment first, but the initial set of selected users is generally not optimal. No matter whether 3) or 4) is executed first, a process of iterative adjustment is inevitable, and the execution results tend to a consistent convergence result.

Example 2

The first preset condition is that the sum of the user association information between the selected users is the minimum, or the product of the user association information between the selected users is the minimum, or the sum of throughputs of all the selected users is the maximum, or the product of throughputs of the selected users is the maximum, or the minimum throughput corresponding to the selected users is the maximum.

The second preset condition is that the number of selected users is not more than $\mu$.

The third preset condition is that the number of adjustments of the set of selected users is not more than $N$, or the minimum throughput corresponding to the selected users is not less than T_min, or the minimum spectral efficiency corresponding to the selected users is not less than SE_min, or the minimum energy efficiency corresponding to the selected users is not less than EE_min, or the minimum SINR corresponding to the selected users is not less than SINR_min, or the sum of throughputs of all the selected users is not less than T_sum, or the sum of spectral efficiencies of all the selected users is not less than SE_sum, or the sum of energy efficiencies of all the selected users is not less than EE_sum, or the sum of SINRs of all the selected users is not less than SINR_sum, or the product of throughputs of all the selected users is not less than T_mul, or the product of spectral efficiencies of all the selected users is not less than SE_mul, or the product of energy efficiencies of all the selected users is not less than EE_mul, or the product of SINRs of all the selected users is not less than SINR_mul, or at least $X1$ selected users each have a throughput not less than T_thre, or at least X2 selected users each have a spectral efficiency not less than SE_thre, or at least X3 selected users each have an energy efficiency not less than EE_thre, or at least X4 selected users each have a SINR not less than SINR_thre, where $\alpha \leq K$, $X1 \leq K$, and $\alpha$, $X1$, $X2$, $X3$ and $X4$ are all positive integers, $K$ is the number of all users in an area, $N$ is a positive integer, T_min, SE_min, EE_min, T_sum, SE_sum, EE_sum, T _mul, SE_mul, EE_mul, T_thre, SE_thre, EE_thre are all positive numbers, and SINR_min, SINR_sum, SINR_mul and SINR_thre are all real numbers.

The second preset condition is that the number of selected users is not more than $\mu$, and then the initial number of selected users satisfies $\delta = \mu$, and the adjustment manner is to gradually delete the selected users.

The process of selecting users includes:

1) grouping users according to the user association information matrix $\Gamma$ to obtain the user grouping information $G = \{g_1, g_2, \cdots, g_l \cdots, g_\theta\}$;
2) determining the initial set S, of selected users according to the user grouping information G and the second preset condition;
3) determining a next set $S_{i+1}$, of selected users according to a current set $S_i$ of selected users, the user grouping situation G , the first preset condition and the second preset condition;
4) determining whether to end the adjustment of the set of selected users according to the third preset condition; if it is determined to end the adjustment, executing 5); and otherwise, executing 3); and
5) determining final selected users according to the last adjusted set of selected users.

In 1) of this example, each group $g_l$ ($l$ = 1, 2, ..., $\theta$) includes at least one user, and there is strong association between different users within the same group, while there is weak association between users from different groups, where $2 \leq \theta \leq K$ and $1 \leq l \leq \theta$.

In 2) of this example, there is a magnitude relationship between the number $\delta$ of selected users and $\theta$, including two cases: $\delta \leq \theta$ and $\delta > \theta$.

In the case of $\delta \leq \theta$, the number of selected users is not more than the number of user groups; $\delta$ user groups may be selected from $\theta$ user groups, and a user is selected from each group of the selected user groups to constitute the initial set S, of selected users; S, is not required to be the optimal result, and may be a result obtained by randomly selecting $\delta$ user groups from the $\theta$ user groups, or may be a combination of the optimal $\delta$ groups selected from a finite number of combinations of

$$C_\theta^\delta.$$

In the case of $\delta > \theta$, the number of selected users is greater than the number of user groups; a user is firstly selected from each group of the $\theta$ user groups, and then $\delta$- $\theta$ users are selected from the $\theta$ user groups, and the results of the two selections of users are taken as the initial set S, of selected users. S, is not required to be the optimal result; the $\delta$ - $\theta$ users selected for the second time from the $\theta$ user groups may be users from $\delta$ - $\theta$ different user groups, or may be $\delta$ - $\theta$ users from a same user group, or may be a situation where some users are selected from a same user group and others are selected from different user groups; a specific situation of selecting $\delta$- $\theta$ users from the $\theta$ user groups for the second time depends on the number of elements in the $\theta$ groups. Similar to the case of $\delta \leq \theta$, the selection of $\delta$ - $\theta$ users from the $\theta$ user groups for the second time may be a random selection, or may be a combination of the optimal $\delta$- $\theta$ users selected from a finite number of combinations.

In 3) of this example, a manner of determining $S_{i+1}$ according to $S_i$, G, the first preset condition and the second preset condition, includes:

Manner B1: deleting a selected user $\omega$ on the basis of $S_i$, so that the sum of user association information between all users in $S_{i+1}$ is the minimum;
Manner B2: deleting a selected user $\omega$ on the basis of $S_i$, so that the product of user association information between all users in $S_{i+1}$ is the minimum;
Manner B3: deleting a selected user $\omega$ on the basis of $S_i$, so that the sum of throughputs of all users in $S_{i+1}$ is the maximum;
Manner B4: deleting a selected user $\omega$ on the basis of $S_i$, so that the product of throughputs of all users in $S_{i+1}$ is the maximum; or
Manner B5: deleting a selected user $\omega$ on the basis of $S_i$, so that a throughput of a user with the minimum throughput among all users in $S_{i+1}$ is the maximum.

For example, $S_i=\{e,f,h,y,z\}$, $\omega \in S_i$, and $S_{i+1} = S_i$ -$\omega$.

In Manner B1, there is a need to find $\omega$ that

$$\min_{\omega} \sum_{k} \gamma_{wk}$$

satisfies the objective function under the constraints of $\omega \in S_i$ and $k \in S_{i+1}$.

In Manner B2, there is a need to find $\omega$ that

satisfies the objective function $\min\limits_{\omega} \prod\limits_{k} \gamma_{wk}$ under the constraints of $\omega \in S_i$ and $k \in S_{i+1}$.

In Manner B3, there is a need to find $\omega$ that satisfies the objective function $\max\limits_{\omega} \sum\limits_{k} T_k$ under the constraints of $\omega \in S_i$ and $k \in S_{i+1}$.

In Manner B4, there is a need to find $\omega$ that satisfies the objective function $\max\limits_{\omega} \prod\limits_{k} T_k$ under the constraints of $\omega \in S_i$ and $k \in S_{i+1}$.

In Manner B5, there is a need to find $\omega$ that satisfies the objective function $\max\limits_{\omega} \min\limits_{k} T_k$ under the constraints of $\omega \in S_i$ and $k \in S_{i+1}$.

The elements in $S_i$ represent IDs of the users selected for the $i$-th time, $\omega$ is an element in the set $S_i$, $S_{i+1}$, is a difference set between the set $S_i$ and the element $\omega$; $k$ is an element in the set $S_{i+1}$, and $K$ is the number of all users in the area, $e, f, h, y, z$ are all positive integers not more than $K$, and $e,f,h,y,z$ are different from one another; and $\gamma_{\omega k}$ is the user association information between User $\omega$ and User $k$, and $T_k$ is the throughput of User $k$ in $S_{i+1}$.

In fact, it is necessary to determine which manner to use in combination with the specific first preset condition. In a case where the first preset condition is that the sum of the user association information between the selected users is the minimum, the product of the user association information between the selected users is the minimum, the sum of throughputs of all the selected users is the maximum, the product of throughputs of all the selected users is the maximum, or the minimum throughput corresponding to the selected users is the maximum, Manners B1, B2, B3, B4, or B5 is used respectively.

Similarly, in a case where the first preset condition is that the sum of spectral efficiencies of all the selected users is the maximum, the sum of energy efficiencies of all the selected users is the maximum, or the sum of SINRs of all the selected users is the maximum, similar to Manner B3, the throughput variable in the objective function in Manner B3 is replaced by a corresponding spectral efficiency variable, energy efficiency variable, or SINR variable respectively. It will be noted that the replaced variable is still a corresponding variable of the users in $S_{i+1}$.

Similarly, in a case where the first preset condition is that the product of spectral efficiencies of all the selected users is the maximum, the product of energy efficiencies of all the selected users is the maximum, or the product of SINRs of all the selected users is the maximum, similar to Manner A4, it is necessary to replace the throughput variable in the objective function in Manner A4 with a corresponding spectral efficiency variable, energy efficiency variable, or SINR variable respectively. It will be noted that the replaced variable is still a corresponding variable of the users in $S_{i+1}$.

Similarly, in a case where the first preset condition is that the minimum spectral efficiency corresponding to the selected users is the maximum, the minimum energy efficiency corresponding to the selected users is the maximum, or the minimum SINR corresponding to the selected users is the maximum, similar to Manner B5, it is necessary to replace the throughput variable in the objective function in Manner B5 with the corresponding spectral efficiency variable, energy efficiency variable, or SINR variable. It will be noted that the replaced variable is still a corresponding variable of the users in $S_{i+1}$.

4) in this example, and a relationship between 3) and 4) are consistent with the corresponding contents in Example 1.

Example 3

The first preset condition is that the sum of user association information between the selected users is the minimum, or the product of user association information between the selected users is the minimum, or the sum of throughputs of all the selected users is the maximum, or the product of throughputs of all the selected users is the maximum, or the minimum throughput corresponding to all the selected users is the maximum.

The second preset condition is that the number of selected users is not more than $\mu$ and not less than $\alpha$.

The third preset condition is that the number of adjustments of the set of selected users is not more than $N$, or the minimum throughput corresponding to the selected users is not less than T_min, or the minimum spectral efficiency corresponding to the selected users is not less than SE_min, or the minimum energy efficiency corresponding to the selected users is not less than EE_min, or the minimum SINR corresponding to the selected users is not less than SINR_min, or the sum of throughputs of all the selected users is not less than T_sum, or the sum of spectral efficiencies of all the selected users is not less than SE_sum, or the sum of energy efficiencies of all the selected users is not less than EE_sum, or the sum of SINRs of all the selected users is not less than SINR_sum, or the product of throughputs of all the selected users is not less than T_mul, or the product of spectral efficiencies of all the selected users is not less than SE_mul, or the product of energy efficiencies of all the selected users is not less than EE_mul, or the product of SINRs of all the selected users is not less than SINR_mul, or at least $X1$ selected users each have a throughput not less than T_thre, or at least X2 selected users each have a spectral efficiency not less than SE_thre, or at least X3 selected users each have an energy efficiency not less than EE_thre, or at least X4 selected users each have a SINR not less than SINR_thre; where $\alpha \le K$, $X1 \le K$, and $\alpha$, $X1$, $X2$, $X3$ and $X4$ are all positive integers, $K$ is the number of all users in the area, $N$ is a positive integer, T_min, SE_min, EE_min, T_sum, SE_sum, EE_sum, T_mul, SE_mul, EE_mul, T_thre, SE_thre, EE_thre are all positive numbers, and SINR_min, SINR_sum, SINR_mul, and SINR_thre are all real numbers.

The second preset condition is that the number of selected users is not more than $\mu$ and not less than $\alpha$, and then the initial number $\delta$ of selected users satisfies $\delta \in [\alpha, \mu]$, and the adjustment manner is to gradually delete the selected users or gradually increase the selected users.

The process of selecting users includes:

1) grouping users according to the user association information matrix $\Gamma$ to obtain the user grouping information $G = \{g_1, g_2, \cdots, g_l \cdots, g_\theta\}$;
2) determining the initial set S, of selected users according to the user grouping information G and the second preset condition;
3) determining a next set $S_{i+1}$, of selected users according to a current set $S_i$ of selected users, the user grouping situation G, the first preset condition and the second preset condition;
4) determining whether to end the adjustment of the set of selected users according to the third preset condition; if it is determined to end the adjustment, executing 5); and otherwise, executing 3); and
5) determining final selected users according to the last adjusted set of selected users.

In 1) of this example, each group $g_l$ ($l$ = 1, 2, ..., $\theta$) includes at least one user, and there is strong association between different users within the same group, while there is weak association between users from different groups, where $2 \le \theta \le K$ and $1 \le l \le \theta$.

In 2) of this example, there is a magnitude relationship between the number $\delta$ of selected users and $\theta$, including two cases: $\delta \le \theta$ and $\delta > \theta$.

In the case of $\delta \le \theta$, the number of selected users is not more than the number of user groups; $\delta$ user groups may be selected from $\theta$ user groups, and a user is selected from each group of the selected user groups to constitute the initial set S, of selected users; S, is not required to be the optimal result, and may be a result obtained by randomly selecting $\delta$ user groups from the $\theta$ user groups, or may be a combination of the optimal $\delta$ groups selected from a finite number of combinations of

$$C_\theta^\delta .$$

In the case of $\delta > \theta$, the number of selected users is greater than the number of user groups; a user is firstly selected from each group of the $\theta$ user groups, and then $\delta$ - $\theta$ users are selected from the $\theta$ user groups, and the results of the two selections are taken as the initial set S, of selected users. S, is not required to be the optimal result; the $\delta$ - $\theta$ users selected for the second time from the $\theta$ user groups may be users from $\delta$ - $\theta$ different user groups, or may be $\delta$ - $\theta$ users from a same user group, or may be a situation where some users are selected from a same user group and others are selected from different user groups; a specific situation of selecting $\delta$ - $\theta$ users from the $\theta$ user groups for the second time depends on the number of elements in the $\theta$ groups. Similar to the case of $\delta \le \theta$, the selection of $\delta$ - $\theta$ users from the $\theta$ user groups for the second time may be a random selection, or may be a combination of the optimal $\delta$ - $\theta$ users selected from a finite number of combinations.

If the adjustment manner is to gradually delete the selected users, then 3) in this example is substantially the same as 3) in Example 1, but before each execution of 3), it is necessary to ensure that the number of selected users is not less than $\alpha$, and otherwise end 3) and execute 5). 4) in this example, and a relationship between 3) and 4) are consistent with the corresponding contents in Example 1.

If the adjustment manner is to gradually increase the selected users, then 3) in this example is substantially the same as 3) in Example 2, but before each execution of 3), it is necessary to ensure that the number of selected users is not more than $\mu$, and otherwise end 3) and execute 5). 4) in this example, and the relationship between 3) and 4) are consistent with the corresponding contents in Example 2.

Example 4

The first preset condition is that the sum of user association information between the selected users is the minimum, or the product of user association information between the selected users is the minimum, or the sum of throughputs of all the selected users is the maximum, or the product of throughputs of all the selected users is the maximum, or the minimum throughput among all the selected users is the maximum.

The second preset condition is that the number of selected UEs is $\xi$.

The third preset condition is that the number of adjustments of the set of selected users is not more than $N$, or the minimum throughput corresponding to the selected users is not less than T_min, or the minimum spectral efficiency corresponding to the selected users is not less than SE_min, or the minimum energy efficiency corresponding to the selected users is not less than EE_min, or the minimum SINR corresponding to the selected users is not less than SINR_min, or the sum of throughputs of all the selected users is not less than T_sum, or the sum of spectral efficiencies of all the selected users is not less than SE_sum, or the sum of energy efficiencies of all the selected users is not less than EE_sum, or the sum of SINRs of all the selected users is not less than SINR_sum, or the product of throughputs of all the selected users is not less than T_mul, or the product of spectral efficiencies of all the selected users is not less than SE_mul, or the product of energy efficiencies of all the selected users is not less than EE_mul, or the product of SINRs of all the selected users is not less than SINR_mul, or at least $X1$ selected users each have a throughput not less than T_thre, or at least X2 selected users each have a spectral efficiency not less than SE_thre, or at least X3 selected users each have an energy efficiency not less than EE_thre, or at least X4 selected users each have a SINR not less than SINR_thre; where $\alpha \le K$, $X1 \le K$, and $\alpha$, $X1$, $X2$, X3 and X4 are all positive integers, $K$ is the number of all users in the area, $N$ is a positive integer, T_min, SE_min, EE_min, T_sum, SE_sum, EE_sum, T_mul, SE_mul, EE_mul, T_thre, SE_thre, EE_thre are all positive numbers, and SINR_min, SINR_sum, SINR_mul, and SINR_thre are all real numbers.

The second preset condition is that the number of selected users is ç, and then the initial number of selected users satisfies $\delta \in [\xi_1, \xi_2]$, where $\xi_1 < ç < \xi_2$, and the adjustment manner is to gradually delete the selected users or gradually increase the selected users.

The process of selecting users includes:

1) grouping users according to the user association information matrix $\Gamma$ to obtain the user grouping information $G = \{g_1, g_2, \cdots, g_l \cdots, g_\theta\}$;
2) determining the initial set S, of selected users according to the user grouping information G and the second preset condition;
3) determining a next set $S_{j+1}$, of selected users according to a current set $S_j$ of selected users, the user grouping situation G, the first preset condition and the second preset condition;
4) determining whether to end the adjustment of the set of selected users according to the third preset condition; if it is determined to end the adjustment, executing 5); and otherwise, executing 3); and
5) determining final selected users according to the last adjusted set of selected users.

In 1) of this example, each group $g_l (l = 1, 2, ..., )$ includes at least one user, and there is strong association between different users within the same group, while there is weak association between users from different groups, where $2 \le \theta \le K$ and $1 \le l \le \theta$.

In 2) of this example, there is a magnitude relationship between the number $\delta$ of selected users and $\theta$, including two cases: $\delta \le \theta$ and $\delta > \theta$.

In the case of $\delta \le \theta$, the number of selected users is not more than the number of user groups; $\delta$ user groups may be selected from $\theta$ user groups, and a user is selected from each group of the selected $\delta$ user groups to constitute the initial set $S_1$ of selected users; $S_1$ is not required to be the optimal result, and may be a result obtained by randomly selecting $\delta$ user groups from the $\theta$ user groups, or may be a combination of the optimal $\delta$

groups selected from a finite number of combinations of

$$C_\theta^\delta.$$

In the case of $\delta > \theta$, the number of selected users is greater than the number of user groups; a user is firstly selected from each group of the $\theta$ user groups, and then $\delta - \theta$ users are selected from the $\theta$ user groups, and the results of the two selections of users are taken as the initial set $S_1$ of selected users. $S_1$ is not required to be the optimal result; the $\delta - \theta$ users selected for the second time from the $\theta$ user groups may be users from $\delta - \theta$ different user groups, or may be $\delta - \theta$ users from a same user group, or may be a situation where some users are selected from a same user group and others are selected from different user groups; a specific situation of selecting $\delta - \theta$ users from the $\theta$ user groups for the second time depends on the number of elements in the $\theta$ groups. Similar to the case of $\delta \le \theta$, the selection of $\delta - \theta$ users from the $\theta$ user groups for the second time may be a random selection, or may be a combination of the optimal $\delta - \theta$ users selected from a finite number of combinations.

If the adjustment manner is to gradually delete the selected users, then 3) in this example is substantially the same as 3) in Example 1, but before each execution of 3), it is necessary to ensure that the number of selected users is not less than ç, and otherwise end 3) and execute 5). 4) in this example, and a relationship between 3) and 4) are consistent with the corresponding contents in Example 1.

If the adjustment manner is to gradually increase the selected users, then 3) in this example is substantially the same as 3) in Example 2, but before each execution of 3), it is necessary to ensure that the number of selected users is not more than ç, and otherwise end 3) and execute 5). 4) in this example, and the relationship between 3) and 4) are consistent with the corresponding contents in Example 2.

Embodiments of the present application further provide an information sending method, which may be applied to a UE or a distributed AP in a wireless network. By sending user feature information to an AP or a control node, the AP or the control node may efficiently select users according to the association between users on the premise of satisfying a preset condition, so as to effectively balance network performance and service relationship complexity and effectively reduce interference between selected users. For technical details that are not described in detail in this embodiment, reference may be made to any of the above embodiments.

FIG. 2 is a flowchart of an information sending method provided by an embodiment. As shown in FIG. 2, the method provided by this embodiment includes: step 210, sending user feature information, the user feature information being used to determine user association information and a user selection result.

In this embodiment, the user feature information refers to information used to analyze the degree of association (which can also be understood as the degree of interference) between different users within the coverage of the network, such as channel information, throughput, power, location, latency and/or service relationship with the AP for each user. The user feature information may be measured by the UE or the distributed AP and sent to the AP or the control node.

The AP or the control node may determine the user association information according to the user feature information, and select an appropriate number of users with a low degree of association and high communication quality to access the network according to the user association information and the preset condition, so as to effectively balance network performance and service relationship complexity and effectively reduce the interference between the selected users.

In an embodiment, the user feature information includes at least one piece of the following information for each user:

a large-scale parameter; instantaneous channel information; an instantaneous throughput; an average throughput; a location; a RSRP; a SINR; service relationship information with an AP; traffic; or a latency requirement.

In an embodiment, the user feature information includes a set of $K$ elements, and $K$ is equal to the total number of users.

Each element represents at least one piece of the following information for a user: an instantaneous throughput; an average throughput; a SINR; traffic; or a latency requirement.

In an embodiment, the user feature information includes a set of $K$ element groups, and $K$ is equal to the total number of users.

Each element group includes at least two elements, and each element group represents a location of a user.

In an embodiment, the user feature information includes a set of $K$ element groups, and $K$ is equal to the total number of users.

Each element group represents one piece of the following information for a user: a large-scale parameter; instantaneous channel information; and a RSRP.

Each element group includes $M$ elements, $M$ is equal to the total number of APs, and each element is associated with an AP.

Each element is a zero element or a non-zero element, the zero element indicates that no service relationship has been established between a user corresponding to an element group to which the zero element belongs and an AP associated with the zero element, and the non-zero element indicates that a service relationship has been established between a user corresponding to an element group to which the non-zero element belongs and an AP associated with the non-zero element.

In an embodiment, the user association information is numeric data or non-numeric data.

The non-numeric data includes at least one of:

a degree of user association; a user-related level; or a user-related type.

In an embodiment, a distance between the user feature information is used to determine corresponding user association information, and the user association information is limited within a set range.

In an embodiment, the user association information constitutes a matrix of $K$ rows and $K$ columns, and diagonal elements of the matrix are 1.

Each element in the matrix represents user association information between a user corresponding to a row where the element is located and a user corresponding to a column where the element is located.

In an embodiment, the preset condition includes at least one of:

a first preset condition, including an objective function of selected users;
a second preset condition, including a constraint condition of the selected users; or
a third preset condition, including a determination condition of the selected users.

In an embodiment, the first preset condition includes at least one of: the sum of user association information between the selected users reaching the minimum value; the product of the user association information between the selected users reaching the minimum value; maximum user association information among the user association information between the selected users reaching the minimum value; the sum of throughputs of the selected users reaching the maximum value; the product of the throughputs of the selected users reaching the maximum value; the minimum throughput among the throughputs of the selected users reaching the maximum value; the sum of spectral efficiencies of the selected users reaching the maximum value; the product of the spectral efficiencies of the selected user reaching the maximum value; the minimum spectral efficiency among the spectral efficiencies of the selected users reaching the maximum value; the sum of energy efficiencies of the selected users reaching the maximum value; the product of the energy efficiencies of the selected users reaching the maximum value; the minimum energy efficiency among the energy efficiencies of the selected users reaching the maximum value; the sum of SINRs of the selected users reaching the maximum value; the product of the SINRs of the selected users reaching the maximum value; or the minimum SINR among the SINRs of the selected users reaching the maximum value.

In an embodiment, the second preset condition includes at least one of: the number of the selected users being not less than $\alpha$; the number of the selected users being not more than $\mu$; the number of the selected users being $\xi$; or the number of the selected users being not less than $\alpha$ and not more than $\mu$; where $\alpha \leq K$, $\mu \leq K$, $\xi \leq K$, and $\alpha$, $\mu$ and ç are all positive integers, and $K$ is equal to the total number of users.

In an embodiment, the third preset condition includes at least one of: the number of adjustments of the selected users being not more than a threshold of times $N$; the minimum user throughput among throughputs of the selected users being not less than a first throughput threshold; the minimum spectral efficiency among spectral efficiencies of the selected users being not less than a first spectral efficiency threshold; the minimum energy efficiency among energy efficiencies of selected users being not less than a first energy efficiency threshold; the minimum SINR among SINRs of the selected users being not less than a first SINR threshold; the sum of the throughputs of the selected users being not less than a second throughput threshold; the sum of the spectral efficiencies of the selected users being not less than a second spectral efficiency threshold; the sum of the energy efficiencies of the selected users being not less than a second energy efficiency threshold; the sum of the SINRs of the selected users being not less than a second SINR threshold; the product of the throughputs of the selected users being not less than a third throughput threshold; the product of the spectral efficiencies of the selected users being not less than a third spectral efficiency threshold; the product of the energy efficiencies of the selected users being not less than a third energy efficiency threshold; the product of the SINRs of the selected users being not less than a third SINR threshold; at least $X1$ selected users each having a throughput not less than a fourth throughput threshold; at least $X2$ selected users each having a spectral efficiency not less than a fourth spectral efficiency threshold; at least $X3$ selected users each having an energy efficiency not less than a fourth energy efficiency threshold; or at least $X4$ selected users each having a SINR not less than a fourth SINR threshold; where $N$ is a positive integer; the first throughput threshold, the first spectral efficiency threshold, the first energy efficiency threshold, the second throughput threshold, the second spectral efficiency threshold, the second energy efficiency threshold, the third throughput threshold, the third spectral efficiency threshold, the third energy efficiency threshold, the fourth throughput threshold, the fourth spectral efficiency threshold and the fourth energy efficiency threshold are all positive numbers; the first SINR threshold, the second SINR threshold, the third SINR threshold and the fourth SINR threshold are all real numbers; $X1 \le K$, $X2 \le K$, $X3 \le K$, $X4 \le K$, $X1$, $X2$, $X3$ and $X4$ are all positive integers.

Embodiments of the present application provide a user selection apparatus. FIG. 3 is a schematic diagram showing a structure of a user selection apparatus provided by an embodiment. As shown in FIG. 3, the user selection apparatus includes:

an information acquisition module 310 configured to acquire user feature information;
an information determination module 320 configured to determine user association information according to the user feature information; and

a selection module 330 configured to select users according to the user association information and a preset condition.

The user selection apparatus in this embodiment may efficiently select users according to the association between users on the premise of satisfying a preset condition, so as to effectively balance network performance and service relationship complexity and effectively reduce interference between selected users.

In an embodiment, the user feature information includes at least one piece of the following information for each user:
a large-scale parameter; instantaneous channel information; an instantaneous throughput; an average throughput; a location; a RSRP; a SINR; service relationship information with an AP; traffic; or a latency requirement.

In an embodiment, the user feature information includes a set of $K$ elements, and $K$ is equal to the total number of users.

Each element represents at least one piece of the following information for a user: an instantaneous throughput; an average throughput; a SINR; traffic; or a latency requirement.

In an embodiment, the user feature information includes a set of $K$ element groups, and $K$ is equal to the total number of users.

Each element group includes at least two elements, and each element group represents a location of a user.

In an embodiment, the user feature information includes a set of $K$ element groups, and $K$ is equal to the total number of users.

Each element group represents one piece of the following information for a user: a large-scale parameter; instantaneous channel information; and a RSRP.

Each element group includes $M$ elements, $M$ is equal to the total number of APs, and each element is associated with an AP.

Each element is a zero element or a non-zero element, the zero element indicates that no service relationship has been established between a user corresponding to an element group to which the zero element belongs and an AP associated with the zero element, and the non-zero element indicates that a service relationship has been established between a user corresponding to an element group to which the non-zero element belongs and an AP associated with the non-zero element.

In an embodiment, the user association information is numeric data or non-numeric data.

The non-numeric data includes at least one of: a degree of user association; a user-related level; or a user-related type.

In an embodiment, acquiring user association information according to the user feature information, includes:
acquiring corresponding user association information according to a distance between the user feature information, the user association information is limited within a set range.

In an embodiment, the user association information constitutes a matrix of $K$ rows and $K$ columns, and diagonal elements of the matrix are 1.

Each element in the matrix represents user association information between a user corresponding to a row where the element is located and a user corresponding to a column where the element is located.

In an embodiment, the preset condition includes at least one of:

a first preset condition including an objective function of selected users;
a second preset condition including a constraint condition of the selected users; or
a third preset condition including a determination condition of the selected users.

In an embodiment, the first preset condition includes at least one of: the sum of user association information between the selected users reaching the minimum value; the product of the user association information between the selected users reaching the minimum value; maximum user association information among the user association information between the selected users reaching the minimum value; the sum of throughputs of the selected users reaching the maximum value; the product of the throughputs of the selected users reaching the maximum value; the minimum throughput among the throughputs of the selected users reaching the maximum value; the sum of spectral efficiencies of the selected users reaching the maximum value; the product of the spectral efficiencies of the selected user reaching the maximum value; the minimum spectral efficiency among the spectral efficiencies of the selected users reaching the maximum value; the sum of energy efficiencies of the selected users reaching the maximum value; the product of the energy efficiencies of the selected users reaching the maximum value; the minimum energy efficiency among the energy efficiencies of the selected users reaching the maximum value; the sum of SINRs of the selected users reaching the maximum value; the product of the SINRs of the selected users reaching the maximum value; or the minimum SINR among the SINRs of the selected users reaching the maximum value.

In an embodiment, the second preset condition includes at least one of: the number of the selected users being not less than $\alpha$; the number of the selected users being not more than $\mu$; the number of the selected users being $\xi$; or the number of the selected users being not less than $\alpha$ and not more than $\mu$; where $\alpha \leq K$, $\mu \leq K$, $\xi \leq K$, and $\alpha$, $\mu$ and ç are all positive integers, and $K$ is equal to the total number of users.

In an embodiment, the third preset condition includes at least one of: the number of adjustments of the selected users being not more than a threshold of times

$N$; the minimum user throughput among throughputs of the selected users being not less than a first throughput threshold; the minimum spectral efficiency among spectral efficiencies of the selected users being not less than a first spectral efficiency threshold; the minimum energy efficiency among energy efficiencies of selected users being not less than a first energy efficiency threshold; the minimum SINR among SINRs of the selected users being not less than a first SINR threshold; the sum of the throughputs of the selected users being not less than a second throughput threshold; the sum of the spectral efficiencies of the selected users being not less than a second spectral efficiency threshold; the sum of the energy efficiencies of the selected users being not less than a second energy efficiency threshold; the sum of the SINRs of the selected users being not less than a second SINR threshold; the product of the throughputs of the selected users being not less than a third throughput threshold; the product of the spectral efficiencies of the selected users being not less than a third spectral efficiency threshold; the product of the energy efficiencies of the selected users being not less than a third energy efficiency threshold; the product of the SINRs of the selected users being not less than a third SINR threshold; at least $X1$ selected users each having a throughput not less than a fourth throughput threshold; at least $X2$ selected users each having a spectral efficiency not less than a fourth spectral efficiency threshold; at least $X3$ selected users each having an energy efficiency not less than a fourth energy efficiency threshold; or at least $X4$ selected users each having a SINR not less than a fourth SINR threshold; where $N$ is a positive integer; the first throughput threshold, the first spectral efficiency threshold, the first energy efficiency threshold, the second throughput threshold, the second spectral efficiency threshold, the second energy efficiency threshold, the third throughput threshold, the third spectral efficiency threshold, the third energy efficiency threshold, the fourth throughput threshold, the fourth spectral efficiency threshold and the fourth energy efficiency threshold are all positive numbers; the first SINR threshold, the second SINR threshold, the third SINR threshold and the fourth SINR threshold are all real numbers; $X1 \leq K$, $X2 \leq K$, $X3 \leq K$, $X4 \leq K$, and $X1$, $X2$, $X3$ and $X4$ are all positive integers.

In an embodiment, the selection module 330 includes:

a grouping unit configured to group users according to the user association information;
an initial selection unit configured to determine an initial set of selected users according to the user grouping information and the second preset condition; and
an adjustment unit configured to adjust the set of selected users until the third preset condition is satisfied according to the first preset condition and the second preset condition, and then take users in the set of selected users as selected users.

In an embodiment, the user grouping information includes $\theta$ element groups, each element group includes at least one element, each element corresponds to a user, and $\theta$ is a positive integer.

A probability that users corresponding to elements in different element groups are jointly selected is greater than a probability that users corresponding to elements in a same element group are jointly selected.

In an embodiment, the initial number of selected users is $\delta$, and $\delta$ is a positive integer.

The initial selection unit is configured to:

in a case of $\delta \le \theta$, select $\delta$ element groups from $\theta$ element groups, and select a user from each element group of the $\delta$ element groups to constitute the initial set of selected users; and

in a case of $\delta > \theta$, select a user from each element group of the $\theta$ element groups, and select $\delta - \theta$ users from the $\theta$ element groups, so as to constitute the initial set of selected users;

where $\delta$ is determined according to the second preset condition.

In an embodiment, in a case where the second preset condition includes the number of selected users being not less than $\alpha$, $\delta = \alpha$;

in a case where the second preset condition includes the number of selected users being not more than $\mu$, $\delta = \mu$;

in a case where the second preset condition includes the number of selected users being not less than $\alpha$ and not more than $\mu$, $\alpha \le \delta \le \mu$; and

in a case where the second preset condition includes the number of selected users being ç, $\xi_1 \le \delta \le \xi_2$; where $\xi_1 < ç < \xi_2$, and $\xi_1$ and $\xi_2$ are all positive numbers, $\alpha \le K$, $\mu \le K$, $\xi \le K$, and $\alpha$, $\mu$ and $\xi$ are all positive integers, and $K$ is equal to the total number of users.

In an embodiment, the adjustment unit includes:

a manner determination subunit configured to determine an adjustment manner of the set of selected users according to the second preset condition; and

an adjustment subunit configured to adjust the set of selected users according to the adjustment manner, where users in the set of selected users satisfy the first preset condition.

In an embodiment, in the case where the second preset condition includes the number of selected users being not less than $\alpha$, the adjustment manner is to increase the users in the set of selected users;

in the case where the second preset condition includes the number of selected users being not more than P, the adjustment manner is to decrease the users in the set of selected users;

in a case where the second preset condition includes the number of selected users being not less than $\alpha$ and not more than P, the adjustment manner is to increase or decrease the users in the set of selected users; and

in the case where the second preset condition includes the number of selected users being ç, the adjustment manner is to increase or decrease the users in the set of selected users;

where $\alpha \le K$, $\mu \le K$, $\xi \le K$, and $\alpha$, $\mu$ and ç are all positive integers, and $K$ is equal to the total number of users.

In an embodiment, the first preset condition includes the sum of user association information between the selected users reaching the minimum value.

The second preset condition includes at least one of: the number of selected users being not less than $\alpha$; the number of selected users being ç; or the number of selected users being not less than $\alpha$ and not more than $\mu$; where $\alpha \le K$, $\mu \le K$, $\xi \le K$, and $\alpha$, $\mu$ and ç are all positive integers, and $K$ is equal to the total number of users.

The adjustment subunit is configured to select a set number of users from unselected users to be added to the set of selected users, so that the sum of user association information between users in the set of selected users is the minimum.

In an embodiment, the first preset condition includes the product of user association information between the selected users reaching the minimum value.

The second preset condition includes at least one of: the number of selected users being not less than $\alpha$; the number of selected users being ç; or the number of selected users being not less than $\alpha$ and not more than $\mu$; where $\alpha \le K$, $\mu \le K$, $\xi \le K$, and $\alpha$, $\mu$ and ç are all positive integers, and $K$ is equal to the total number of users.

The adjustment subunit is configured to select a set number of users from unselected users to be added to the set of selected users, so that the product of user association information between users in the set of selected users is the minimum.

In an embodiment, the first preset condition includes at least one of: the sum of throughputs of the selected users reaching the maximum value; the sum of spectral efficiencies of the selected users reaching the maximum value; the sum of energy efficiencies of the selected users reaching the maximum value; or the sum of SINRs of the selected users reaching the maximum value.

The second preset condition includes at least one of: the number of selected users being not less than $\alpha$; the number of selected users being ç; or the number of selected users being not less than $\alpha$ and not more than $\mu$; where $\alpha \le K$, $\mu \le K$, $\xi \le K$, and $\alpha$, $\mu$ and ç are all positive integers, and $K$ is equal to the total number of users.

The adjustment subunit is configured to select a set number of users from unselected users to be added to the set of selected users, so that the sum of throughputs of users in the set of selected users reaches the maximum value, the sum of spectral efficiencies of users in the set of selected users reaches the maximum value, the sum of energy efficiencies of users in the set of selected users reaches the maximum value, and/or the sum of SINRs of users in the set of selected users reaches the maximum value.

In an embodiment, the first preset condition includes at least one of: the product of throughputs of the selected users reaching the maximum value; the product of spectral efficiencies of the selected users reaching the maximum value; the product of energy efficiencies of the selected users reaching the maximum value; or the product of SINRs of the selected users reaching the maximum value.

The second preset condition includes at least one of: the number of selected users being not less than $\alpha$; the number of selected users being ç; or the number of selected users being not less than $\alpha$ and not more than $\mu$; where $\alpha \leq K$, $\mu \leq K$, $\xi \leq K$, and $\alpha$, $\mu$ and ç are all positive integers, and $K$ is equal to the total number of users.

The adjustment subunit is configured to select a set number of users from unselected users to be added to the set of selected users, so that the product of throughputs of users in the set of selected users reaches the maximum value, the product of spectral efficiencies of users in the set of selected users reaches the maximum value, the product of spectral efficiencies of users in the set of selected users reaches the maximum value, and/or the product of SINRs of users in the set of selected users reaches the maximum value.

In an embodiment, the first preset condition includes at least one of: the minimum throughput among throughputs of the selected users reaching the maximum value; the minimum spectral efficiency among spectral efficiencies of the selected users reaching the maximum value; the minimum energy efficiency among energy efficiencies of the selected users reaching the maximum value; or the minimum SINR among SINRs of the selected users reaching the maximum value.

The second preset condition includes at least one of: the number of selected users being not less than $\alpha$; the number of selected users being ç; or the number of selected users being not less than $\alpha$ and not more than $\mu$; where $\alpha \leq K$, $\mu \leq K$, $\xi \leq K$, and $\alpha$, $\mu$ and ç are all positive integers, and $K$ is equal to the total number of users.

The adjustment subunit is configured to select a set number of users from unselected users to be added to the set of selected users, so that the minimum throughput among throughputs of users in the set of selected users reaches the maximum value, the minimum spectral efficiency among spectral efficiencies of users in the set of selected users reaches the maximum value, the minimum energy efficiency among energy efficiencies of users in the set of selected users reaches the maximum value, and/or the minimum SINR among SINRs of users in the set of selected users reaches the maximum value.

In an embodiment, the first preset condition includes the sum of user association information between the selected users reaching the minimum value.

The second preset condition includes at least one of: the number of selected users being not more than $\mu$; the number of selected users being ç; or the number of selected users being not less than $\alpha$ and not more than $\mu$; where $\alpha \leq K$, $\mu \leq K$, $\xi \leq K$, and $\alpha$, $\mu$ and ç are all positive integers, and $K$ is equal to the total number of users.

The adjustment subunit is configured to delete a set number of users from the set of selected users, so that the sum of user association information between users in the set of selected users is the minimum.

In an embodiment, the first preset condition includes the product of user association information between the selected users reaching the minimum value.

The second preset condition includes at least one of: the number of selected users being not more than $\mu$; the number of selected users being $\xi$; or the number of selected users being not less than $\alpha$ and not more than $\mu$; where $\alpha \leq K$, $\mu \leq K$, $\xi \leq K$, and $\alpha$, $\mu$ and $\xi$ are all positive integers, and $K$ is equal to the total number of users.

The adjustment subunit is configured to delete a set number of users from the set of selected users, so that the product of user association information between users in the set of selected users is the minimum.

In an embodiment, the first preset condition includes at least one of: the sum of throughputs of the selected users reaching the maximum value; the sum of spectral efficiencies of the selected users reaching the maximum value; the sum of energy efficiencies of the selected users reaching the maximum value; or the sum of SINRs of the selected users reaching the maximum value.

The second preset condition includes at least one of: the number of selected users being not more than $\mu$; the number of selected users being $\xi$; or the number of selected users being not less than $\alpha$ and not more than $\mu$; where $\alpha \leq K$, $\mu \leq K$, $\xi \leq K$, and $\alpha$, $\mu$ and $\xi$ are all positive integers, and $K$ is equal to the total number of users.

The adjustment subunit is configured to delete a set number of users from the set of selected users, so that the sum of throughputs of users in the set of selected users reaches the maximum value, the sum of spectral efficiencies of users in the set of selected users reaches the maximum value, the sum of spectral efficiencies of users in the set of selected users reaches the maximum value, and/or the sum of SINRs of users in the set of selected users reaches the maximum value.

In an embodiment, the first preset condition includes at least one of: the product of throughputs of the selected users reaching the maximum value; the product of spectral efficiencies of the selected users reaching the maximum value; the product of energy efficiencies of the selected users reaching the maximum value; or the product of SINRs of the selected users reaching the maximum value.

The second preset condition includes at least one of: the number of selected users being not more than $\mu$; the number of selected users being $\xi$; or the number of selected users being not less than $\alpha$ and not more than $\mu$; where $\alpha \le K$, $\mu \le K$, $\xi \le K$, and $\alpha$, $\mu$ and $\xi$ are all positive integers, and $K$ is equal to the total number of users.

The adjustment subunit is configured to delete a set number of users from the set of selected users, so that the product of throughputs of users in the set of selected users reaches the maximum value, the product of spectral efficiencies of users in the set of selected users reaches the maximum value, the product of spectral efficiencies of users in the set of selected users reaches the maximum value, and/or the product of SINRs of users in the set of selected users reaches the maximum value.

In an embodiment, the first preset condition includes at least one of: the minimum throughput among throughputs of the selected users reaching the maximum value; the minimum spectral efficiency among spectral efficiencies of the selected users reaching the maximum value; the minimum energy efficiency among energy efficiencies of the selected users reaching the maximum value; or the minimum SINR among SINRs of the selected users reaching the maximum value.

The second preset condition includes at least one of: the number of selected users being not more than $\mu$; the number of selected users being $\xi$; or the number of selected users being not less than $\alpha$ and not more than $\mu$; where $\alpha \le K$, $\mu \le K$, $\xi \le K$, and $\alpha$, $\mu$ and $\xi$ are all positive integers, and $K$ is equal to the total number of users.

The adjustment subunit is configured to delete a set number of users from the set of selected users, so that the minimum throughput among throughputs of users in the set of selected users reaches the maximum value, the minimum spectral efficiency among spectral efficiencies of users in the set of selected users reaches the maximum value, the minimum energy efficiency among energy efficiencies of users in the set of selected users reaches the maximum value, and/or the minimum SINR among SINRs of users in the set of selected users reaches the maximum value.

The user selection apparatus provided in these embodiments belongs to the same conception as the user selection method provided in the above embodiments. For technical details not described in detail in these embodiments, reference may be made to any of the above embodiments, and these embodiments have the same beneficial effects as executing the user selection method.

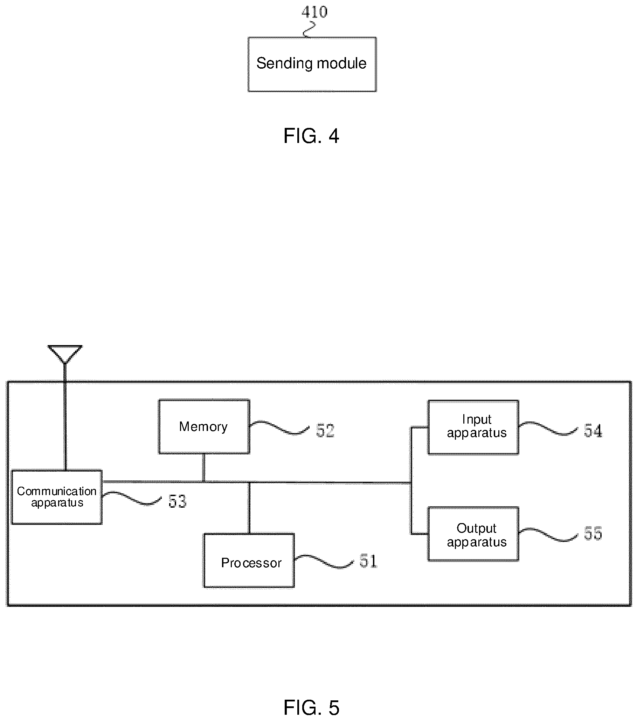

Embodiments of the present application provide an information sending apparatus. FIG. 4 is a schematic diagram showing a structure of an information sending apparatus provided by an embodiment. As shown in FIG. 4, the information sending apparatus includes:

a sending module 410 configured to send user feature information, the user feature information being used to determine user association information and a user selection result.

The information sending apparatus in this embodiment sends the user feature information, so that an AP or a control node may efficiently select users according to the association between users on the premise of satisfying a preset condition, so as to effectively balance network performance and service relationship complexity and effectively reduce interference between selected users.

In an embodiment, the user feature information includes at least one piece of the following information for each user:

a large-scale parameter; instantaneous channel information; an instantaneous throughput; an average throughput; a location; a RSRP; a SINR; service relationship information with an AP; traffic; or a latency requirement.

In an embodiment, the user feature information includes a set of $K$ elements, and $K$ is equal to the total number of users.

Each element represents at least one piece of the following information for a user: an instantaneous throughput; an average throughput; a SINR; traffic; or a latency requirement.

In an embodiment, the user feature information includes a set of $K$ element groups, and $K$ is equal to the total number of users.

Each element group includes at least two elements, and each element group represents a location of a user.

In an embodiment, the user feature information includes a set of $K$ element groups, and $K$ is equal to the total number of users.

Each element group represents one piece of the following information for a user: a large-scale parameter; instantaneous channel information; and a RSRP.

Each element group includes $M$ elements, $M$ is equal to the total number of APs, and each element is associated with an AP.

Each element is a zero element or a non-zero element, the zero element indicates that no service relationship has been established between a user corresponding to an element group to which the zero element belongs and an AP associated with the zero element, and the non-zero element indicates that a service relationship has been established between a user corresponding to an element group to which the non-zero element belongs and an AP associated with the non-zero element.

In an embodiment, the user association information is numeric data or non-numeric data.

The non-numeric data includes at least one of: a degree of user association; a user-related level; or a user-related type.

In an embodiment, a distance between user characteristic information corresponds to user association information, and the user association information is limited within a set range.

In an embodiment, the user association information constitutes a matrix of $K$ rows and $K$ columns, and diagonal elements of the matrix are 1.

Each element in the matrix represents user association information between a user corresponding to a row where the element is located and a user corresponding to a column where the element is located.

In an embodiment, the preset condition includes at least one of:

a first preset condition including an objective function of selected users;
a second preset condition including a constraint condition of the selected users; or
a third preset condition including a determination condition of the selected users.

In an embodiment, the first preset condition includes at least one of: the sum of user association information between the selected users reaching the minimum value; the product of the user association information between the selected users reaching the minimum value; the maximum user association information among the user association information between the selected users reaching the minimum value; the sum of throughputs of the selected users reaching the maximum value; the product of the throughputs of the selected users reaching the maximum value; the minimum throughput among the throughputs of the selected users reaching the maximum value; the sum of spectral efficiencies of the selected users reaching the maximum value; the product of the spectral efficiencies of the selected user reaching the maximum value; the minimum spectral efficiency among the spectral efficiencies of the selected users reaching the maximum value; the sum of energy efficiencies of the selected users reaching the maximum value; the product of the energy efficiencies of the selected users reaching the maximum value; the minimum energy efficiency among the energy efficiencies of the selected users reaching the maximum value; the sum of SINRs of the selected users reaching the maximum value; the product of the SINRs of the selected users reaching the maximum value; or the minimum SINR among the SINRs of the selected users reaching the maximum value.

In an embodiment, the second preset condition includes at least one of: the number of selected users being not less than $\alpha$; the number of selected users being not more than $\mu$; the number of selected users being $\xi$; the number of selected users being not less than $\alpha$ and not more than $\mu$;
where $\alpha < \mu \leq K$, $\xi \leq K$, and $\alpha$, $\mu$ and $\xi$ are all positive integers, and $K$ is equal to the total number of users.

In an embodiment, the third preset condition includes at least one of: the number of adjustments of the selected users being not more than a threshold of times $N$; the minimum user throughput among throughputs of the selected users being not less than a first throughput threshold; the minimum spectral efficiency among spectral efficiencies of the selected users being not less than a first spectral efficiency threshold; the minimum energy efficiency among energy efficiencies of selected users being not less than a first energy efficiency threshold; the minimum SINR among SINRs of the selected users being not less than a first SINR threshold; the sum of the throughputs of the selected users being not less than a second throughput threshold; the sum of the spectral efficiencies of the selected users being not less than a second spectral efficiency threshold; the sum of the energy efficiencies of the selected users being not less than a second energy efficiency threshold; the sum of the SINRs of the selected users being not less than a second SINR threshold; the product of the throughputs of the selected users being not less than a third throughput threshold; the product of the spectral efficiencies of the selected users being not less than a third spectral efficiency threshold; the product of the energy efficiencies of the selected users being not less than a third energy efficiency threshold; the product of the SINRs of the selected users being not less than a third SINR threshold; at least $X1$ selected users each having a throughput not less than a fourth throughput threshold; at least $X2$ selected users each having a spectral efficiency not less than a fourth spectral efficiency threshold; at least $X3$ selected users each having an energy efficiency not less than a fourth energy efficiency threshold; or at least $X4$ selected users each having a SINR not less than a fourth SINR threshold; where $N$ is a positive integer; the first throughput threshold, the first spectral efficiency threshold, the first energy efficiency threshold, the second throughput threshold, the second spectral efficiency threshold, the second energy efficiency threshold, the third throughput threshold, the third spectral efficiency threshold, the third energy efficiency threshold, the fourth throughput threshold, the fourth spectral efficiency threshold and the fourth energy efficiency threshold are all positive numbers; the first SINR threshold, the second SINR threshold, the third SINR threshold and the fourth SINR threshold are all real numbers; $X1 \leq K$, $X2 \leq K$, $X3 \leq K$, $X4 \leq K$, and $X1$, $X2$, $X3$ and $X4$ are all positive integers.

The information sending apparatus provided in these embodiments belongs to the same conception as the user selection method provided in the above embodiments. For technical details not described in detail in these embodiments, reference may be made to any of the above embodiments, and these embodiments have the same beneficial effects as executing the user selection method.

Embodiments of the present application provide a communication node. FIG. 5 is a schematic diagram showing a hardware structure of a communication node provided by an embodiment. As shown in FIG. 5, the communication node provided in the present application includes a memory 52, a processor 51, and a computer program stored on the memory 52 and runnable on the processor 51. When executing the program, the processor 51 implements the user selection method or the information sending method as described above.

The communication node may include a memory 52; the number of processors 51 in the communication node may be one or more, and one processor 51 is taken as an example in FIG. 5; the memory 52 is used to store one or more programs; the one or more programs are executed by the one or more processors 51, such that the one or more processors 51 implement the user selection method or the information sending method as described in the embodiment of the present application.

The communication node further includes: a communication apparatus 53, an input apparatus 54 and an output apparatus 55.

The processor 51, the memory 52, the communication apparatus 53, the input apparatus 54 and the output apparatus 55 in the communication node may be connected via a bus or in other manners, and the connection via a bus is taken as an example in FIG. 5.

The input apparatus 54 may be used to receive input digital or character information and generate key signal inputs related to user setting and functional control of the communication node. The output apparatus 55 may include a display device such as a display screen.

The communication apparatus 53 may include a receiver and a sender. The communication apparatus 53 is configured to send and receive information under control of the processor 51.

As a computer-readable storage medium, the memory 52 may be configured to store software programs, computer-executable programs, and modules, such as program instructions/modules corresponding to the user selection method as described in the embodiments of the present application (e.g., the information acquisition module 310, the information determination module 320 and the selection module 330 in a user selection apparatus). The memory 52 may include a storage program area and a storage data area, where the storage program area may store an operating system and an application program that is required by at least one function, and the storage data area may store data created according to the usage of the communication node and the like. In addition, the memory 52 may include a high-speed random access memory, and may also include a non-volatile memory, such as at least one magnetic disk storage device, flash memory device, or other non-volatile solid-state storage devices. In some examples, the memory 52 may further include memories remotely set with respect to the processor 51, and these remote memories may be connected to the communication node via a network. Instances of the network include, but are not limited to, the Internet, intranet, local area network, mobile communication network, and their combinations.

Embodiments of the present application further provide a storage medium. The storage medium has stored a computer program, and the computer program, when executed by a processor, implements the user selection method or the information sending method described in any of the embodiments of the present application.

The user selection method includes: acquiring user feature information; determining user association information according to the user feature information; and selecting users according to the user association information and a preset condition.

The information sending method includes: sending user feature information, the user feature information being used to determine user association information and a user selection result.

The computer storage medium in the embodiments of the present application may use any combination of one or more computer-readable media. The computer-readable medium may be a computer-readable signal medium or a computer-readable storage medium. The computer-readable storage medium may be, for example, but not limited to: a system, apparatus or device of electricity, magnetism, light, electromagnetism, infrared, or semiconductors, or any combination of the above. In a more specific example (non-exhaustive list), the computer-readable storage medium includes: an electrical connection with one or more wires, a portable computer disk, a hard disk, a random access memory (RAM), a read-only memory (ROM), an erasable programmable read only memory (EPROM), a flash memory, an optical fiber, a portable compact disk read-only memory (CD-ROM), an optical storage device, a magnetic storage device, or any suitable combination of the above. The computer readable storage medium may be any tangible medium that includes or stores a program, which may be used by or in combination with an instruction execution system, apparatus, or device.

The computer readable signal medium may include a data signal propagated in a baseband or as part of a carrier, which carries computer-readable program code. Such a propagated data signal may take various forms, including but not limited to an electromagnetic signal, an optical signal, or any suitable combination of the above. The computer-readable signal medium may also be any computer-readable medium other than a computer-readable storage medium, which may send, propagate, or transmit a program for use by or in combination with an instruction execution system, apparatus, or device.

The program code included on a computer-readable medium may be transmitted by using any appropriate medium, including but not limited to: wireless, wire, optical cable, radio frequency (RF), etc., or any suitable combination of the above.

The computer program code for executing the operations in the present application may be written in one or more programming languages or combinations thereof, including object-oriented programming languages such as Java, Smalltalk, C++, and conventional procedural programming languages such as "C" or similar programming languages. The program code may be executed completely on the user's computer, executed partially on the user's computer, executed as a stand-alone software package, executed partially on the user's computer and partially on a remote computer, or executed completely on the remote computer or a server. In a case of involving a remote computer, the remote computer may be connected to the user's computer through any type of network, including a local area network (LAN) or a wide area network (WAN), or may be connected to an external computer (e.g., connected via the Internet by using an Internet service provider).

The above contents are merely exemplary embodiments of the present application, and are not intended to limit the scope of protection of the present application.

It will be understood by those skilled in the art that the term "user terminal" covers any suitable type of wireless user equipment, such as a mobile phone, a portable data processing apparatus, a portable web browser, or a vehicle-mounted mobile station.

Generally speaking, various embodiments of the present application may be implemented in hardware or dedicated circuits, software, logic, or any combination thereof. For example, in some aspects, the embodiments may be implemented in hardware, while in other aspects, the embodiments may be implemented in firmware or software which may be executed by a controller, a microprocessor or other computing apparatuses, although the present application is not limited thereto.

The embodiments of the present application may be implemented in a manner in which a data processor of a mobile apparatus executes computer program instructions, e.g., in a processor entity, or by hardware, or by a combination of software and hardware. Computer program instructions may be assembly instructions, instruction set architecture (ISA) instructions, machine instructions, machine-related instructions, microcode, firmware instructions, status setting data, or source code or object code written in any combination of one or more programming languages.

A block diagram of any logic process in the drawings of the present application may represent program steps, or may represent interconnected logic circuits, modules, and functions, or may represent a combination of program steps, logic circuits, modules, and functions. Computer programs may be stored on the memory. The memory may be of any type suitable to the local technical environment and may be implemented by using any suitable data storage technology, such as, but not limited to, a read-only memory (ROM), a random access memory (RAM), an optical storage apparatus and system (e.g., a digital video disc (DVD) or a compact disc (CD)). The computer-readable medium may include a non-transitory storage medium. The data processor may be of any type suitable to the local technical environment, such as, but not limited to, a general purpose computer, a special purpose computer, a microprocessor, a digital signal processor (DSP), an application specific integrated circuit (ASIC), a field-programmable gate array (FPGA), and a processor based on a multi-core processor architecture.

**Claims**

1. A user selection method, comprising:

   acquiring user feature information;
   determining user association information according to the user feature information; and
   selecting users according to the user association information and a preset condition.

2. The method according to claim 1, wherein the user feature information includes at least one piece of following information for each user:
   a large-scale parameter; instantaneous channel information; an instantaneous throughput; an average throughput; a location; a reference signal receiving power RSRP; a signal to interference plus noise ratio SINR; service relationship information with an access point AP; traffic; or a latency requirement.

3. The method according to claim 1, wherein the user feature information includes a set of $K$ elements, and $K$ is equal to a total number of users; and
   each element represents at least one piece of following information for a user: an instantaneous throughput; an average throughput; a SINR; traffic; or a latency requirement.

4. The method according to claim 1, wherein the user feature information includes a set of $K$ element groups, and $K$ is equal to a total number of users; and
   each element group includes at least two elements, and each element group represents a location of a user.

5. The method according to claim 1, wherein the user feature information includes a set of $K$ element groups, and $K$ is equal to a total number of users;

   each element group represents one piece of following information for a user: a large-scale parameter; instantaneous channel information; and a RSRP;
   each element group includes $M$ elements, $M$ is equal to a total number of APs, and each element is associated with an AP; and
   each element is a zero element or a non-zero element, the zero element indicates that no service relationship has been established between a user corresponding to an element group to which the zero element belongs and an AP associated with the zero element, and the non-zero element indicates that a service relationship has been established between a user corresponding to an element group to which the non-zero element belongs and an AP associated with the non-zero element.

6. The method according to claim 1, wherein the user association information is numeric data or non-numeric data; and
the non-numeric data includes at least one of: a degree of user association; a user-related level; or a user-related type.

7. The method according to claim 1, wherein the determining user association information according to the user feature information, includes:
acquiring corresponding user association information according to a distance between user feature information, wherein the user association information is limited within a set range.

8. The method according to claim 1, wherein the user association information constitutes a matrix of $K$ rows and $K$ columns, diagonal elements of the matrix are 1, and $K$ is equal to a total number of users; and
each element in the matrix represents user association information between a user corresponding to a row where the element is located and a user corresponding to a column where the element is located.

9. The method according to claim 1, wherein the preset condition includes at least one of:

a first preset condition including an objective function of selected users;
a second preset condition including a constraint condition of the selected users; or
a third preset condition including a determination condition of the selected users.

10. The method according to claim 9, wherein the first preset condition includes at least one of:

a sum of user association information between the selected users reaching a minimum value;
a product of the user association information between the selected users reaching a minimum value;
maximum user association information among the user association information between the selected users reaching a minimum value;
a sum of throughputs of the selected users reaching a maximum value;

a product of the throughputs of the selected users reaching a maximum value;
a minimum throughput among the throughputs of the selected users reaching a maximum value;
a sum of spectral efficiencies of the selected users reaching a maximum value;
a product of the spectral efficiencies of the selected user reaching a maximum value;
a minimum spectral efficiency among the spectral efficiencies of the selected users reaching a maximum value;
a sum of energy efficiencies of the selected users reaching a maximum value;
a product of the energy efficiencies of the selected users reaching a maximum value;
a minimum energy efficiency among the energy efficiencies of the selected users reaching a maximum value;
a sum of SINRs of the selected users reaching a maximum value;
a product of the SINRs of the selected users reaching a maximum value; or
a minimum SINR among the SINRs of the selected users reaching a maximum value.

11. The method according to claim 9, wherein the second preset condition includes at least one of:

a number of the selected users being not less than $\alpha$;
the number of the selected users being not more than $\mu$;
the number of the selected users being $\xi$; or
the number of the selected users being not less than $\alpha$ and not more than $\mu$;
wherein $\alpha \leq K$, $\mu \leq K$, $\xi \leq K$, and $\alpha$, $\mu$ and $\xi$ are all positive integers, and $K$ is equal to a total number of users.

12. The method according to claim 9, wherein the third preset condition includes at least one of:

a number of adjustments of the selected users being not more than a threshold of times $N$;
a minimum user throughput among throughputs of the selected users being not less than a first throughput threshold;
a minimum spectral efficiency among spectral efficiencies of the selected users being not less than a first spectral efficiency threshold;
a minimum energy efficiency among energy efficiencies of selected users being not less than a first energy efficiency threshold;
a minimum SINR among SINRs of the selected users being not less than a first SINR threshold;
a sum of the throughputs of the selected users being not less than a second throughput threshold;

a sum of the spectral efficiencies of the selected users being not less than a second spectral efficiency threshold;

a sum of the energy efficiencies of the selected users being not less than a second energy efficiency threshold;

a sum of the SINRs of the selected users being not less than a second SINR threshold;

a product of the throughputs of the selected users being not less than a third throughput threshold;

a product of the spectral efficiencies of the selected users being not less than a third spectral efficiency threshold;

a product of the energy efficiencies of the selected users being not less than a third energy efficiency threshold;

a product of the SINRs of the selected users being not less than a third SINR threshold;

at least $X1$ selected users each having a throughput not less than a fourth throughput threshold;

at least $X2$ selected users each having a spectral efficiency not less than a fourth spectral efficiency threshold;

at least $X3$ selected users each having an energy efficiency not less than a fourth energy efficiency threshold; or

at least $X4$ selected users each having a SINR not less than a fourth SINR threshold;

wherein $N$ is a positive integer; the first throughput threshold, the first spectral efficiency threshold, the first energy efficiency threshold, the second throughput threshold, the second spectral efficiency threshold, the second energy efficiency threshold, the third throughput threshold, the third spectral efficiency threshold, the third energy efficiency threshold, the fourth throughput threshold, the fourth spectral efficiency threshold and the fourth energy efficiency threshold are all positive numbers; the first SINR threshold, the second SINR threshold, the third SINR threshold and the fourth SINR threshold are all real numbers; $X1 \le K$, $X2 \le K$, $X3 \le K$, $X4 \le K$, and $X1$, $X2$, $X3$ and $X4$ are all positive integers, and $K$ is equal to a total number of users.

13. The method according to claim 1, wherein the selecting users according to the user association information and the preset condition, includes:

grouping users according to the user association information to acquire user grouping information;

determining an initial set of selected users according to the user grouping information and a second preset condition; and

adjusting a set of selected users according to the first preset condition and the second preset condition until a third preset condition is satisfied, and then taking users in a set of selected users as selected users.

14. The method according to claim 13, wherein the user grouping information includes $\theta$ element groups, each element group includes at least one element, each element corresponds to a user, and $\theta$ is a positive integer; and

a probability that users corresponding to elements in different element groups are jointly selected is greater than a probability that users corresponding to elements in a same element group are jointly selected.

15. The method according to claim 14, wherein an initial number of selected users is $\delta$, and $\delta$ is a positive integer; and

the determining the initial set of selected users according to the user grouping information and the second preset condition, includes:

in a case of $\delta \le \theta$, selecting $\delta$ element groups from the $\theta$ element groups, and selecting a user from each element group of the $\delta$ element groups to constitute the initial set of selected users; and

in a case of $\delta > \theta$, selecting a user from each element group of the $\theta$ element groups, and selecting $\delta - \theta$ users from the $\theta$ element groups, so as to constitute the initial set of selected users;

wherein $\delta$ is determined according to the second preset condition.

16. The method according to claim 15, wherein

in a case where the second preset condition includes a number of selected users being not less than $\alpha$, $\delta = \alpha$;

in a case where the second preset condition includes the number of selected users being not more than $\mu$, $\delta = \mu$;

in a case where the second preset condition includes the number of selected users being not less than $\alpha$ and not more than $\mu$, $\alpha \le \delta \le \mu$; and

in a case where the second preset condition includes the number of selected users being $\xi$, $\xi_1 \le \delta \le \xi_2$;

wherein $\xi_1 < \xi < \xi_2$, and $\xi_1$ and $\xi_2$ are all positive numbers, $\alpha \le K$, $\mu \le K$, $\xi \le K$, and $\alpha$, $\mu$ and $\xi$ are all positive integers, and $K$ is equal to a total number of users.

17. The method according to claim 13, wherein the adjusting the set of selected users according to the first preset condition and the second preset condition, includes:

determining an adjustment manner for the set of selected users according to the second preset condition; and

adjusting the set of selected users according to the adjustment manner, wherein users in the set of selected users satisfy the first preset condition.

18. The method according to claim 17, wherein

in a case where the second preset condition includes a number of selected users is not less than $\alpha$, the adjustment manner is to increase users in the set of selected users;

in a case where the second preset condition includes the number of selected users being not more than $\mu$, the adjustment manner is to decrease users in the set of selected users;

in a case where the second preset condition includes the number of selected users being not less than $\alpha$ and not more than $\mu$, the adjustment manner is to increase or decrease users in the set of selected users; and

in a case where the second preset condition includes the number of selected users being $\xi$, the adjustment manner is to increase or decrease users in the set of selected users; wherein $\alpha \le K$, $\mu \le K$, $K$, and $\alpha$, $\mu$ and $\xi$ are all positive integers, and $K$ is equal to a total number of users.

19. The method according to claim 17, wherein the first preset condition includes at least one of: a sum of user association information between the selected users reaching a minimum value; or a product of the user association information between the selected users reaching a minimum value;

the second preset condition includes at least one of: a number of selected users being not less than $\alpha$; the number of selected users being $\xi$; or the number of selected users being not less than $\alpha$ and not more than $\mu$; wherein $\alpha \le K$, $\mu \le K$, $\xi \le K$, and $\alpha$, $\mu$ and $\xi$ are all positive integers, and $K$ is equal to a total number of users; and the adjusting the set of selected users according to the adjustment manner, includes: selecting a set number of users from unselected users to be added to the set of selected users, so that users in the set of selected users satisfy at least one of: a sum of user association information between the users being the minimum; or a product of user association information between the users being the minimum.

20. The method according to claim 17, wherein the first preset condition includes at least one of: a sum of throughputs of the selected users reaching a maximum value; a sum of spectral efficiencies of the selected users reaching a maximum value; a sum of energy efficiencies of the selected users reaching a maximum value; or a sum of SINRs of the selected users reaching a maximum value;

the second preset condition includes at least one of: a number of selected users being not less than $\alpha$; the number of selected users being $\xi$; or the number of selected users being not less than $\alpha$ and not more than $\mu$; wherein $\alpha \le K$, $\mu \le K$, $\xi \le K$, and $\alpha$, $\mu$ and $\xi$ are all positive integers, and $K$ is equal to a total number of users; and the adjusting the set of selected users according to the adjustment manner, includes: selecting a set number of users from unselected users to be added to the set of selected users, so that users in the set of selected users satisfy at least one of: a sum of throughputs of the users reaching a maximum value; a sum of spectral efficiencies of the users reaching a maximum value; a sum of energy efficiencies of the users reaching a maximum value; or a sum of signal to interference plus noise ratios (SINRs) of the users reaching a maximum value.

21. The method according to claim 17, wherein the first preset condition includes at least one of: a product of throughputs of the selected users reaching a maximum value; a product of spectral efficiencies of the selected users reaching a maximum value; a product of energy efficiencies of the selected users reaching a maximum value; or a product of SINRs of the selected users reaching a maximum value;

the second preset condition includes at least one of: a number of selected users being not less than $\alpha$; the number of selected users being $\xi$; or the number of selected users being not less than $\alpha$ and not more than $\mu$; wherein $\alpha \le K$, $\mu \le K$, $\xi \le K$, and $\alpha$, $\mu$ and $\xi$ are all positive integers, and $K$ is equal to a total number of users; and the adjusting the set of selected users according to the adjustment manner, includes: selecting a set number of users from unselected users to be added to the set of selected users, so that users in the set of selected users satisfy at least one of: a product of throughputs of the users reaching a maximum value; a product of spectral efficiencies of the users reaching a maximum value; a product of energy efficiencies of the users reaching a maximum value; or a product of SINRs of the users reaching a maximum value.

22. The method according to claim 17, wherein the first preset condition includes at least one of: a minimum throughput among throughputs of the selected users reaching a maximum value; a minimum spectral efficiency among spectral efficiencies of the selected users reaching a maximum value; a minimum energy efficiency among energy efficiencies of the selected users reaching a maximum value; or a minimum SINR among SINRs of the selected users reaching a maximum value;

the second preset condition includes at least one of: a number of selected users being not less than $\alpha$; the number of selected users being $\xi$; or the number of selected users being not less than $\alpha$ and not more than $\mu$; wherein $\alpha \le K$, $\mu \le K$, $\xi \le K$, and $\alpha$, $\mu$ and $\xi$ are all positive integers, and $K$ is equal to a total number of users; and the adjusting the set of selected users according to the adjustment manner, includes: selecting a set number of users from unselected users to be added to the set of selected users, so that users in the set of selected users satisfy at least one of: a minimum throughput among throughputs of the users reaching a maximum value; a minimum spectral efficiency among spectral efficiencies of the users reaching a maximum value; a minimum energy efficiency among energy efficiencies of the users reaching a maximum value; or a minimum SINR among SINRs of the users reaching a maximum value.

23. The method according to claim 17, wherein the first preset condition includes at least one of: a sum of user association information between the selected users reaching a minimum value; or a product of the user association information between the selected users reaching a minimum value;

the second preset condition includes at least one of: a number of selected users being not more than $\mu$; the number of selected users being $\xi$; the number of selected users being not less than $\alpha$ and not more than $\mu$; wherein $\alpha \le K$, $\mu \le K$, $\xi \le K$, and $\alpha$, $\mu$ and $\xi$ are all positive integers, and $K$ is equal to a total number of users; and the adjusting the set of selected users according to the adjustment manner, includes: deleting a set number of users from the set of selected users, so that users in the set of selected users satisfy at least one of: a sum of user association information between the users being the minimum; or a product of user association information between the users being the minimum.

24. The method according to claim 17, wherein the first preset condition includes at least one of: a sum of throughputs of the selected users reaching a maximum value; a sum of spectral efficiencies of the selected users reaching a maximum value; a sum of energy efficiencies of the selected users reaching a maximum value; or a sum of SINRs of the selected users reaching a maximum value;

the second preset condition includes at least one of: a number of selected users being not more than $\mu$; the number of selected users being $\xi$; the number of selected users being not less than $\alpha$ and not more than $\mu$; wherein $\alpha \le K$, $\mu \le K$, $\xi \le K$, and $\alpha$, $\mu$ and $\xi$ are all positive integers, and $K$ is equal to a total number of users; and the adjusting the set of selected users according to the adjustment manner, includes: deleting a set number of users from the set of selected users, so that users in the set of selected users satisfy at least one of: a sum of throughputs of the users reaching a maximum value; a sum of spectral efficiencies of the users reaching a maximum value; a sum of energy efficiencies of the users reaching a maximum value; or a sum of SINRs of the users reaching a maximum value.

25. The method according to claim 17, wherein the first preset condition includes at least one of: a product of throughputs of the selected users reaching a maximum value; a product of spectral efficiencies of the selected users reaching a maximum value; a product of energy efficiencies of the selected users reaching a maximum value; or a product of SINRs of the selected users reaching a maximum value;

the second preset condition includes at least one of: a number of selected users being not more than $\mu$; the number of selected users being $\xi$; the number of selected users being not less than $\alpha$ and not more than $\mu$; wherein $\alpha \le K$, $\mu \le K$, $\xi \le K$, and $\alpha$, $\mu$ and $\xi$ are all positive integers, and $K$ is equal to a total number of users; and the adjusting the set of selected users according to the adjustment manner, includes: deleting a set number of users from the set of selected users, so that users in the set of selected users satisfy at least one of: a product of throughputs of the users reaching a maximum value; a product of spectral efficiencies of the users reaching a maximum value; a product of energy efficiencies of the users reaching a maximum value; or a product of SINRs of the users reaching a maximum value.

26. The method according to claim 17, wherein the first preset condition includes at least one of: a minimum throughput among throughputs of the selected users reaching a maximum value; a minimum spectral efficiency among spectral efficiencies of the selected users reaching a maximum value; a minimum energy efficiency among energy efficiencies of the selected users reaching a maximum value; or a minimum SINR among SINRs of the selected users reaching a maximum value;

the second preset condition includes at least one of: a number of selected users being not more than $\mu$; the number of selected users being $\xi$; the number of selected users being not less than $\alpha$ and not more than $\mu$; wherein $\alpha \leq K$, $\mu \leq K$, $\xi \leq K$, and $\alpha$, $\mu$ and $\xi$ are all positive integers, and $K$ is equal to a total number of users; and
the adjusting the set of selected users according to the adjustment manner, includes:
deleting a set number of users from the set of selected users, so that users in the set of selected users satisfy at least one of: a minimum throughput among throughputs of the users reaching a maximum value; a minimum spectral efficiency among spectral efficiencies of the users reaching a maximum value; a minimum energy efficiency among energy efficiencies of the users reaching a maximum value; or a minimum SINR among SINRs of the users reaching a maximum value.

27. An information sending method, comprising:
sending user feature information, wherein the user feature information is used to determine user association information and a user selection result.

28. A communication node, comprising a memory, a processor, and a computer program stored on the memory and runnable on the processor, wherein when executing the computer program, the processor implements the user selection method according to any one of claims 1 to 26 or the information sending method according to claim 27.

29. A computer-readable storage medium having stored a computer program, wherein when executed by a processor, the computer program implements the user selection method according to any one of claims 1 to 26 or the information sending method according to claim 27.

Acquire user feature information ∿110

Determine user association information according to the user feature information ∿120

Select a user according to the user association information and a preset condition ∿130

FIG. 1

Send user feature information, the user feature information being used to determine user association information and a user selection result ∿210

FIG. 2

310 | 320 | 330

| Information acquisition module | Information determination module | Selection module |

FIG. 3

410

Sending module

FIG. 4

Memory — 52

Input
apparatus — 54

Communication
apparatus — 53

Processor — 51

Output
apparatus — 55

FIG. 5

## INTERNATIONAL SEARCH REPORT

| International application No. |
|---|
| **PCT/CN2022/074902** |

| **A.** | **CLASSIFICATION OF SUBJECT MATTER** |
|---|---|

H04B 7/0413(2017.01)i

According to International Patent Classification (IPC) or to both national classification and IPC

| **B.** | **FIELDS SEARCHED** |
|---|---|

Minimum documentation searched (classification system followed by classification symbols)

H04B; H04W

Documentation searched other than minimum documentation to the extent that such documents are included in the fields searched

Electronic data base consulted during the international search (name of data base and, where practicable, search terms used)

CNTXT; CNKI; ENTXTC; ENTXT; 3GPP: 用户, 终端, 选择, 选取, 关联度, 关联程度, 相关性, 相关度, 相干性, 相干度, 正交, 吞吐量, 位置, 距离, RSRP, SINR, 数量, 数目, 增加, 减少, 删除, UE, terminal, select+, choos+, association, correlation, coherence, orthogonality, throughput, location, distance, RSRP, SINR, number, increase, decrease, delete

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 101252420 A (INSTITUTE OF COMPUTING TECHNOLOGY, CHINESE ACADEMY OF SCIENCES) 27 August 2008 (2008-08-27)<br>description page 4 paragraph 8- page 6 paragraph 7) | 1-12, 27-29 |
| X | CN 101635608 A (BEIJING UNIVERSITY OF POSTS AND TELECOMMUNICATIONS) 27 January 2010 (2010-01-27)<br>description page 10 paragraph 3- page 14 paragraph 5 | 1-12, 27-29 |
| X | CN 102118744 A (ZHEJIANG UNIVERSITY) 06 July 2011 (2011-07-06)<br>description, paragraphs [0021]-[0032] | 1-12, 27-29 |
| X | EP 3276846 A1 (ALCATEL LUCENT) 31 January 2018 (2018-01-31)<br>description paragraphs 67-70 | 1-12, 27-29 |
| A | CN 108370263 A (HUAWEI TECHNOLOGIES CO., LTD.) 03 August 2018 (2018-08-03)<br>entire document | 1-29 |
| A | CN 103532607 A (SOUTHEAST UNIVERSITY) 22 January 2014 (2014-01-22)<br>entire document | 1-29 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 March 2022** | **30 March 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/074902**

| Patent document cited in search report | | | Publication date (day/month/year) | Patent family member(s) | | | Publication date (day/month/year) |
|---|---|---|---|---|---|---|---|
| CN | 101252420 | A | 27 August 2008 | CN | 101252420 | B | 22 February 2012 |
| CN | 101635608 | A | 27 January 2010 | CN | 101635608 | B | 09 July 2014 |
| CN | 102118744 | A | 06 July 2011 | CN | 102118744 | B | 24 July 2013 |
| EP | 3276846 | A1 | 31 January 2018 | EP | 3276846 | B1 | 06 January 2021 |
| CN | 108370263 | A | 03 August 2018 | WO | 2017108075 | A1 | 29 June 2017 |
| CN | 103532607 | A | 22 January 2014 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110195578